(19) Europäisches Patentamt
European Patent Office
Office européen des brevets

(11) EP 2 686 097 B1

(12) **FASCICULE DE BREVET EUROPEEN**

(45) Date de publication et mention de la délivrance du brevet:
**21.01.2015 Bulletin 2015/04**

(21) Numéro de dépôt: **12728776.1**

(22) Date de dépôt: **16.03.2012**

(51) Int Cl.:
***B01J 13/10*** *(2006.01)*

(86) Numéro de dépôt international:
**PCT/IB2012/051281**

(87) Numéro de publication internationale:
**WO 2012/123925 (20.09.2012 Gazette 2012/38)**

(54) **VÉSICULES CATANIONIQUES, LEUR PROCÉDÉ DE PRÉPARATION ET LEURS APPLICATIONS**

KATANIONISCHE VESIKEL, VERFAHREN ZU IHRER HERSTELLUNG UND ANWENDUNGEN DAVON

CATANIONIC VESICLES, METHOD FOR THE PREPARATION THEREOF, AND APPLICATIONS OF SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2011 FR 1100786**

(43) Date de publication de la demande:
**22.01.2014 Bulletin 2014/04**

(73) Titulaire: **Commissariat à l'Énergie Atomique et aux Énergies Alternatives**
**75015 Paris (FR)**

(72) Inventeurs:
- **CARRIERE, David**
**F-92120 Montrouge (FR)**
- **MENAGER, Christine**
**F-78230 Le Pecq (FR)**
- **BEALLE, Gaëlle**
**F-75016 Paris (FR)**
- **RAVAUX, Johann**
**F-84000 Avignon (FR)**
- **PODOR, Renaud**
**F-30210 Cabrieres (FR)**

(74) Mandataire: **Mena, Sandra et al**
**Cabinet Orès**
**36, rue de St Pétersbourg**
**75008 Paris (FR)**

(56) Documents cités:
**FR-A1- 2 866 246 FR-A1- 2 937 259**
- **YANG Y ET AL: "Synthesis of magnetic particles via a cationic-anionic surfactant vesicle method", JOURNAL OF MAGNETISM AND MAGNETIC MATERIALS, ELSEVIER SCIENCE PUBLISHERS, AMSTERDAM, NL, vol. 305, no. 1, 1 octobre 2006 (2006-10-01), pages 40-46, XP024984908, ISSN: 0304-8853, DOI: 10.1016/J.JMMM.2005.11.028 [extrait le 2006-10-01]**
- **BEAUNE G ET AL: "Interaction between catanionic vesicles and giant magnetic vesicles", COMPTES RENDUS - CHIMIE, ELSEVIER, PARIS, FR, vol. 12, no. 1-2, 1 janvier 2009 (2009-01-01), pages 38-44, XP025913592, ISSN: 1631-0748, DOI: 10.1016/J.CRCI.2008.08.012 [extrait le 2008-11-12]**
- **C. MENAGER ET AL: "Synthesis of magnetic DDAB vesicles", COLLOID POLYM SCI, vol. 272, no. 10, 1 janvier 1994 (1994-01-01), pages 1295-1299, XP055009460, cité dans la demande**
- **MAREN KRACK ET AL: "Nanoparticle-Loaded Magnetophoretic Vesicles", JOURNAL OF THE AMERICAN CHEMICAL SOCIETY, vol. 130, no. 23, 1 juin 2008 (2008-06-01) , pages 7315-7320, XP055009443, ISSN: 0002-7863, DOI: 10.1021/ja077398k cité dans la demande**
- **HYE YOUNG KOO ET AL: "Emulsion-Based Synthesis of Reversibly Swellable, Magnetic Nanoparticle-Embedded Polymer Microcapsules", CHEMISTRY OF MATERIALS, vol. 18, no. 14, 1 juillet 2006 (2006-07-01), pages 3308-3313, XP055009457, ISSN: 0897-4756, DOI: 10.1021/cm0608286 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **BOUDIER A ET AL: "Polyvalent catanionic vesicles: Exploring the drug delivery mechanisms", INTERNATIONAL JOURNAL OF PHARMACEUTICS, ELSEVIER BV, NL, vol. 403, no. 1-2, 17 janvier 2011 (2011-01-17), pages 230-236, XP027554470, ISSN: 0378-5173 [extrait le 2010-12-09]**

## Description

La présente invention est relative à des vésicules catanioniques constituées d'un mélange de tensioactifs de charges opposées, porteuses de nanoparticules magnétiques. Elle concerne également un procédé pour leur préparation, ainsi qu'à leurs utilisations notamment dans les domaines de la pharmacie, de la cosmétique, et de la bio-imagerie magnétique. Enfin, l'invention se rapporte à un procédé de guidage de vésicules catanioniques selon l'invention sous l'influence d'un champ magnétique, ainsi qu'un procédé de libération des solutés éventuellement présents au sein de ces vésicules.

Les mélanges de tensioactifs anioniques et cationiques en milieu aqueux donnent naissance à ce qu'il est convenu d'appeler des solutions « catanioniques ». Lorsque les solutions catanioniques sont chauffées à une température supérieure à la température de fusion des chaînes, les tensioactifs anioniques et cationiques s'auto-assemblent sous la forme de micelles stables de formes variées (sphères, cylindres ou encore bicouches pliées). En fonction des proportions relatives entre constituants cationiques et anioniques, différentes formes de structures peuvent être obtenues. Ces différentes structures de vésicules ont été observées et décrites, notamment dans Zemb T. et al., Science, 1999, 283, 816-819 ; Dubois M. et al., Nature, 2001, 411, 672-675; WO2005/089927 ; EP-1 846 152.

FR 2 937 259 A1 décrit un procédé pour la préparation d'une dispersion de vésicules en milieu aqueux , caractérisé en ce qu'il comprend les étapes suivantes: 1) le mélange d'un tensioactif anionique et un tensioactif cationique; et 2) la dialyse de la suspension.

Les vésicules catanioniques peuvent être utilisées comme « réacteurs » pour assister la préparation de nanoparticules magnétiques, les nanoparticules étant dans ce cas encapsulées à l'intérieur des vésicules catanioniques (Yaacob I. I. et al., Journal of Colloid and Interface Science, 1995, 171, 73-84 ; Yang Y. et al., Journal of Magnetism and Magnetic Materials, 2006,305, 40-46).

L'encapsulation de nanoparticules magnétiques au sein de capsules de polymères, de vésicules de copolymère, de vésicules multilamellaires, ou encore de liposomes (vésicules non catonioniques) a également fait l'objet de nombreuses publications (M. Martina et al., J. Am. Chem. Soc., 2005, 127, 10676-10685 ; H. Y. Koo et al., Chem. Mater., 2006, 18, 3308-3313 ; Krack M., J. Am. Chem. Soc., 2008, 130, 7315-7320 ; Faure C. et al., J. Phys. Chem. B, 2009, 113, 8552-8559 ; Menager C. et al., Colloid and Polymer Science, 1994, 272, No. 10, 1295-1299 ; Beaune G. et al., J. Phys. Chem B, 2008, 112, 7424-7429 ; Cintra E. R. et al., Nanotechnology, 2009, 20, 045103). Cependant, l'utilisation de telles vésicules ne donne pas toujours entière satisfaction en termes de stabilité. Les procédés mis en oeuvre nécessitent parfois l'emploi de solvants organiques dont l'utilisation n'est pas toujours compatible avec les milieux physiologiques. En outre, leur activation par champ magnétique est toujours susceptible de détruire thermiquement le soluté encapsulé dans les vésicules, ainsi que leur environnement immédiat.

Une étude sur les interactions entre des vésicules catanioniques et des vésicules géantes unilamellaires encapsulant des nanoparticules magnétiques a par ailleurs démontré que l'ajout de vésicules catanioniques induisait des instabilités et des déformations (Beaune et al., C. R. Chimie, 2009, 12, 38-44).

Les nanoparticules magnétiques sont stabilisées dans l'eau grâce à des charges électrostatiques : on parle alors de ferrofluides ioniques. Dans ce cas, les nanoparticules magnétiques sont stabilisées soit en milieu basique (en présence d'hydroxyde de tétraméthylammonium par exemple), soit en milieu acide (en présence par exemple d'acide nitrique à $pH < 3$). Or, les vésicules catanioniques se déforment et expulsent leur contenu lorsque la force ionique du milieu dans lequel elles sont dispersées dépasse $10^{-3}$ $mol.L^{-1}$. Les solutions de vésicules catanioniques et de nanoparticules magnétiques ne peuvent donc être additionnées simultanément.

Une solution proposée par l'état de l'art consiste à encapsuler dans les vésicules un soluté passif, de type chlorure de sodium NaCl ou glucose, suffisamment concentré pour équilibrer les concentrations à l'intérieur et à l'extérieur des vésicules, ce qui limite ou enraye la déformation et le vidage des vésicules après ajout des nanoparticules magnétiques. Les vésicules catanioniques et les nanoparticules magnétiques portent dans ce cas la même charge électrostatique et se repoussent mutuellement, empêchant ainsi l'accrochage des nanoparticules sur les parois des vésicules. Un autre inconvénient de cette méthode vient de la concentration en soluté passif qui, lorsqu'elle est trop importante, conduit à l'éclatement des vésicules (Kopetzki D. et al., Soft Matter, 2009, 5, 4212-4218).

Ainsi, il ressort de l'analyse de l'état de l'art que l'addition de nanoparticules magnétiques en présence de vésicules déjà formées conduit à des problèmes de compatibilité chimique. De plus, la formation des vésicules en présence de nanoparticules déjà synthétisées mène à l'encapsulation des nanoparticules, sans qu'elles puissent être accrochées à leur surface. En outre, l'accrochage des nanoparticules sur les parois des vésicules nécessite généralement l'ajout de composés pouvant conduire à la destruction des vésicules par choc osmotique (Béalle G. et al., Soft Matter, 2011, 7, 1084-1089).

Les Inventeurs ont maintenant observé qu'il était possible de fixer des nanoparticules magnétiques sur les parois de vésicules catanioniques, tout en gardant les vésicules intactes, non déformées, et aussi imperméables aux petits solutés que des vésicules catanioniques classiques. De telles vésicules ainsi fonctionnalisées présentent l'avantage de pouvoir être guidées *in vitro* et *in vivo* dans une zone ciblée par application d'un champ magnétique permanent,

les molécules qu'elles contiennent (principes actifs par exemple) pouvant être libérées à la demande, sans destruction thermique, grâce à l'application d'un champ magnétique oscillant qui induit une rupture mécanique des vésicules ou leur perméabilisation par fusion.

Les Inventeurs ont mis au point de nouvelles vésicules catanioniques dispersées dans un milieu aqueux sensiblement neutre dont les parois, qui définissent une phase interne, sont constituées d'un mélange d'au moins un tensioactif anionique et d'au moins un tensioactif cationique, des nanoparticules magnétiques étant fixées sur les parois desdites vésicules. Ces vésicules sont stables sur des périodes de plusieurs mois et permettent notamment de retenir et de contrôler sans dégradation la diffusion lente de molécules actives. Elles peuvent être diluées, dialysées ou concentrées sans destruction de leur paroi. En outre, les vésicules de l'invention présentent l'avantage d'être simples à préparer par un procédé ne faisant pas appel à l'emploi de solvants organiques.

L'invention a donc pour premier objet des vésicules non poreuses en dispersion dans une composition aqueuse (phase externe) dont les parois, qui définissent une phase interne, sont constituées d'un mélange d'au moins un tensioactif anionique et d'au moins un tensioactif cationique, des nanoparticules magnétiques étant fixées sur les parois desdites vésicules. La fixation des nanoparticules magnétiques à la surface des vésicules peut se faire soit par voie chimique, soit par voie physique. Les nanoparticules magnétiques peuvent être greffées, adsorbées et/ou fixées par interactions électrostatiques sur les parois des vésicules. De manière avantageuse, elles sont fixées sur les parois des vésicules par adsorption.

Par vésicules non poreuses ou faiblement perméables, on entend des vésicules dont les parois sont capables de prévenir le passage de solutés contenus dans leur cavité interne vers la phase externe et inversement pendant des temps suffisamment longs.

Les vésicules de l'invention présente l'avantage d'être faiblement perméables, et en l'absence d'actifs dissous dans leur cavité, de renfermer dans leur cavité interne une solution aqueuse de pH différent de celui de la phase externe d'au moins une unité de pH.

Les vésicules de l'invention se caractérisent également par :

- le fait qu'une différence de pH d'au moins une unité et avantageusement deux unités entre la phase interne et la phase externe des vésicules est conservée sur une durée d'au moins 1 mois, et préférentiellement 2 mois,
- leur résistance à la dialyse : les vésicules sont résistantes à la dialyse, c'est-à-dire qu'elles ne sont pas détruites par la dialyse (observations par microscopie), leur composition en tensioactifs ne change pas (observé par HPLC), même si on les laisse à dialyser pendant 2100 heures. C'est un phénomène très étonnant, parce que l'homme du métier s'attendait à ce que la dialyse élimine le tensioactif soluble, et donc entraîne la destruction totale des vésicules.

Les vésicules peuvent être cristallisées (observations par diffraction aux rayons X). Cela implique que les tensioactifs sont « gelés » et ne s'échangent pas avec la solution extérieure. Les vésicules sont donc solides.

La taille des vésicules est également un paramètre important qu'il est utile de pouvoir contrôler en vue de leur application notamment dans le domaine pharmaceutique, les vésicules de petite taille étant plus facilement assimilées par l'organisme humain ou animal.

Selon une variante préférée, les vésicules catanioniques de l'invention ont un diamètre compris entre 0,1 et 100 $\mu$m, et de préférence entre 0,1 et 30 $\mu$m, la taille des vésicules pouvant être ajustée en modifiant la concentration en tensioactif lors de la solubilisation.

Les tensioactifs anioniques utilisés pour la formation de vésicules selon l'invention peuvent comporter un groupement polaire anionique et au moins une chaîne alkyle en $C_8$-$C_{30}$ éventuellement substituée par un ou plusieurs groupements hydroxyle et un ou plusieurs atomes d'halogène ou de deutérium. Le groupement polaire anionique est choisi parmi les fonctions acide ou sel d'acide. Préférentiellement ces tensioactifs anioniques sont des dérivés de chaîne alkyle en $C_8$-$C_{24}$, ou hydroxyalkyle en $C_8$-$C_{24}$, ou fluoroalkyle en $C_8$-$C_{24}$. De préférence, ils sont choisis parmi les acides carboxyliques à chaîne alkyle en $C_8$-$C_{24}$, ou hydroxyalkyle en $C_8$-$C_{24}$, ou fluoroalkyle en $C_8$-$C_{24}$, les acides di-carboxyliques à chaîne hydrophobe carbonée en $C_8$-$C_{24}$, les phosphates, les sulfates et les sulfonates comportant une ou deux chaînes alkyles en $C_8$-$C_{24}$.

Le tensioactif anionique mis en oeuvre peut être un acide neutre qui libère un proton dans l'eau. Ainsi, l'expression « tensioactif anionique » inclut les tensioactifs ionisables en tensioactifs anioniques.

Parmi les tensioactifs anioniques préférés, on peut en particulier citer les acides gras tels que l'acide laurique, l'acide myristique, l'acide palmitique, l'acide dodécanedioïque, l'acide tétradécanedioïque, l'acide hexadécanedioïque, l'acide 12-dodécanoïque, l'acide 14-tétradécanoïque, l'acide 16-hydroxyhexadécanoïque.

Le tensioactif anionique peut éventuellement être en mélange avec un tensioactif non-ionique, préférentiellement choisi parmi des dérivés de chaîne alkyle en $C_8$-$C_{24}$, ou hydroxyalkyle en $C_8$-$C_{24}$, ou fluoroalkyle en $C_8$-$C_{24}$, comme par exemple un alcool gras ou un dérivé d'alcool gras : un hydroxyalkyle en $C_8$-$C_{24}$, un éther d'un hydrate de carbone en $C_4$-$C_{24}$ et d'un hydroxyalkyle en $C_8$-$C_{24}$. Le tensioactif non-ionique peut être introduit sans endommager les vésicules. L'utilisation de tensioactif non-ionique en mélange avec le tensioactif ionique permet de diminuer le gradient de pH entre

le compartiment interne et le milieu externe.

Les tensioactifs cationiques utilisés pour la formation des vésicules de l'invention peuvent être des molécules comportant un groupement polaire cationique et au moins une chaîne alkyle ou aryle ou aralkyle, saturée ou insaturée, ayant de 8 à 30 atomes de carbone et éventuellement interrompue par une fonction ester ou éther. Ces tensioactifs sont de préférence choisis parmi les ammoniums mono- et bicaténaires répondant aux formules (I) et (I') suivantes et les bases correspondantes :

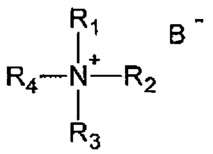 (I)

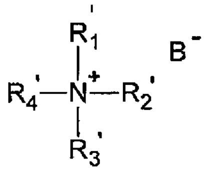 (I')

dans lesquelles :

- $R_1$, $R_2$, $R_3$, $R'_1$ et $R'_2$, identiques ou différents, représentent un groupement choisi parmi : H, un alkyle en $C_1$-$C_4$, un hydroxyalkyle en $C_1$-$C_4$ ou un alkyl($C_1$-$C_4$)éther,
- $R_4$, $R'_3$ et $R'_4$, identiques ou différents, représentent un groupement choisi parmi : une chaîne hydrocarbonée saturée ou insaturée en $C_8$-$C_{24}$, un benzyle, un aralkyle en $C_8$-$C_{24}$ ou un groupement alkyl($C_4$-$C_{20}$)ester d'alkyle($C_4$-$C_{20}$),
- $B^-$ représente un ion pouvant être choisi parmi $OH^-$, $F^-$, $Cl^-$, $Br^-$, $I^-$, $BF_4^-$, $SO_4^{2-}$.

Le tensioactif cationique mis en oeuvre selon l'invention peut être une base neutre qui se protone dans l'eau. Ainsi, l'expression « tensioactif cationique » inclut les tensioactifs ionisables en tensioactifs cationiques.

Dans les formules (I) et (I') ci-dessus, $R_1$, $R_2$, $R_3$, $R'_1$ et $R'_2$, représentent de préférence un radical méthyle.

Dans les formules (I) et (I') ci-dessus, $R'_3$, $R'_4$ et $R_4$, sont notamment choisis parmi :

- les chaînes alkyles en $C_8$-$C_{24}$ telles que par exemple les chaînes stéaryle, cétyle, dodécyle, tétradécyle et myristyle ;
- les groupements alkyl($C_4$-$C_{20}$)ester d'alkyle($C_4$-$C_{20}$) tels que par exemple les alkyl($C_{16}$)esters d'alkyle($C_4$-$C_{20}$) et les alkyl($C_{12}$)esters d'alkyle($C_4$-$C_{20}$).

Parmi les tensioactifs cationiques préférés, on peut en particulier citer le bromure de cétyltriméthylammonium, le chlorure de cétyltriméthylammonium et le bromure de myristyl triméthylammonium.

La concentration en tensioactifs dans le mélange est notée c et est calculée de la façon suivante :

$$c = \frac{mA + mC}{mA + mC + mH_2O}$$

$m_A$ désignant la masse de tensioaçtif anionique, $m_C$ la masse de tensioactif cationique et $m_{H2O}$ la masse d'eau.

Le choix de la concentration massique c permet de contrôler la taille finale des vésicules : plus c est faible, plus la taille des vésicules est élevée. De préférence c est comprise entre 0,01 et 5%, et encore plus préférentiellement entre 1 et 4%.

Les nanoparticules magnétiques peuvent être fixées sur la face interne, sur la face externe ou à la fois sur les faces interne et externe des vésicules catanioniques. Les vésicules catanioniques de l'invention peuvent également comprendre des nanoparticules magnétiques encapsulées au sein de leur cavité interne, lesdites particules pouvant dans ce cas s'agglomérer pour donner des grains de plus gros diamètre.

Les nanoparticules magnétiques de l'invention sont de préférence choisies parmi les nanoparticules d'oxyde de fer magnétiques $Fe_3O_4$ ou $Fe_2O_3$, ou les nanoparticules d'oxydes mixtes telles que $CoFe_2O_4$ ou $Ni_xMn_{1-x}Fe_2O_4$ où x varie de 0 à 1. De manière préférée, les nanoparticules de l'invention sont des nanoparticules de maghémite $\gamma$-$Fe_2O_3$.

Selon une variante préférée, les nanoparticules magnétiques ont un diamètre allant de 5 à 50 nm, et de préférence de 7 à 20 nm.

L'invention a également pour objet un procédé pour la préparation d'une dispersion de vésicules en milieu aqueux, ce procédé comprenant les étapes suivantes :

i) le mélange d'au moins un tensioactif anionique et d'au moins un tensioactif cationique tels que définis selon

l'invention, avec une solution de nanoparticules magnétiques telle que définie selon l'invention, ledit mélange étant réalisé en milieu acide à un pH compris entre 1 et 4, et de préférence à pH = 3, les nanoparticules magnétiques et les proto-vésicules catanioniques (vésicules catanioniques allongées) formées au cours de cette étape étant de mêmes charges,
ii) optionnellement, la dilution de la suspension obtenue lors de l'étape i) dans une solution aqueuse pure ou dans une solution aqueuse comprenant des solutés, à une température pouvant varier de 5 à 95°C,
iii) optionnellement, l'élimination d'une partie des nanoparticules magnétiques par centrifugation, décantation ou tri magnétique,
iv) la dialyse de la suspension à un pH compris entre 5 et 7, et de préférence à pH = 6, pour gonfler les proto-vésicules formées en vésicules catanioniques sphériques et annuler et/ou inverser les charges des nanoparticules magnétiques, et
v) optionnellement, l'élimination des nanoparticules magnétiques en excès par centrifugation, décantation ou tri magnétique.

La solution de nanoparticules magnétiques ajoutées lors de l'étape i) peut être préalablement préparée selon le procédé décrit dans Massart R., IEEE, 1981, 17, 1247-1248. Les nanoparticules peuvent également être triées par taille, par séparation de phase induite par ajout de sel tel que selon la méthode décrite par Lefebure et al., J. Mater. Res., 1998, Vol. 13, N°10, 2975-2981.

Le mélange de l'étape i) est réalisé en milieu acide, de préférence dans une solution d'acide nitrique $HNO_3$. Le mélange peut être maintenu sous agitation pendant une durée de 1 à 3 jours. Lors de cette étape, le mélange peut être chauffé à une température comprise entre 30 et 70°C, de préférence à une température de 50°C.

Un soluté à encapsuler peut être ajouté lors de l'étape i). Ledit soluté peut être un principe actif tel que la doxorubicine, un composé organique tel que la Rhodamine 6G ou la Rhodamine B, ou des solutés passifs tels que le chlorure de sodium NaCl ou le glucose, ou leurs mélanges. Ces mêmes solutés peuvent également être ajoutés lors de l'étape ii) de dilution.

L'étape i) peut optionnellement être suivie d'une étape de dilution dans une solution d'eau pure ou dans une solution aqueuse comprenant des solutés tels que ceux mentionnés ci-dessus. Au cours de cette étape, la suspension est chauffée à une température pouvant varier de 5 à 95°C pendant une durée comprise entre 10 et 60 minutes, et de préférence pendant une durée de 30 minutes. L'étape ii) de dilution/chauffage permet de contrôler la dispersion et l'éventuelle agglomération des nanoparticules à l'intérieur des vésicules catanioniques, ainsi que leur fixation sur les parois des vésicules.

Les nanoparticules magnétiques en excès peuvent ensuite être éliminées par centrifugation, décantation ou tri magnétique.

L'étape iv) de dialyse conduit au gonflement des proto-vésicules précédemment formées en vésicules catanioniques sphériques, ainsi qu'à l'annulation/inversion de charges des nanoparticules magnétiques et à l'élimination des sels présents dans la solution aqueuse dans laquelle les vésicules sont en suspension.

La dialyse est de préférence réalisée dans des tubes de dialyse avec des membranes semi-perméables de cellulose ayant un seuil de coupure moléculaire de 8-10 kDa, des seuils plus bas pouvant également convenir. On utilise en général un volume de vésicules catanioniques pour 100 volumes de bain de dialyse. Le bain de dialyse peut être changé par de l'eau fraîche à intervalles réguliers, notamment pour éliminer les solutés qui ne sont pas encapsulés dans les vésicules. L'eau de dialyse est de préférence changée toutes les heures pendant les 6 premières heures de dialyse, puis deux fois par jour pendant les 4 jours suivants. Il est préférable d'agiter le bain de dialyse pour permettre une élimination rapide du sel entre les vésicules, et ainsi éviter leur déstabilisation.

Au cours de la dialyse, il est fréquent d'observer dans un premier temps une séparation de phase (typiquement au bout de 12 heures). Il suffit alors d'agiter un peu le tube de dialyse pour que la solution s'homogénéise, et on obtient finalement une suspension qui ne se sépare plus jamais en deux phases.

La durée de dialyse $t_{dial}$ est généralement choisie pour que l'élimination des ions à l'extérieur des vésicules soit complète. Habituellement 2 à 3 jours suffisent. Si $t_{dial}$ est trop courte, la dispersion est instable et peut former un précipité ou un surnageant d'agrégats, ou former des cristaux. Un choix de $t_{dial}$ trop long n'altère pas la qualité des vésicules obtenues. Toutefois, après plusieurs mois de dialyse, les vésicules finissent par se vider de leur contenu.

L'excès de nanoparticules magnétiques peut être éliminé au cours d'une étape iii) supplémentaire par centrifugation, décantation ou tri magnétique, par exemple en plaçant à côté de la solution un aimant magnétique qui attire les nanoparticules agrégées en solution, les vésicules catanioniques restant alors en suspension.

Selon une variante de l'invention, les vésicules peuvent être stabilisées par au moins un polymère adsorbé à leur surface. Parmi les polymères utilisables, on peut citer ceux choisis parmi :

- les polysaccharides tels que par exemple les dextranes et les dérivés de cellulose tels que les hydroxyméthylcelluloses, les hydroxyéthylcelluloses et les hydroxypropylcelluloses,

- les polymères de synthèse tels que les polyéthylèneglycols (PEG), la polyvinylpyrrolidone (PVP), les polystyrènes, les polyacrylates, les polyvinylalcools tels que les produits vendus sous les dénominations commerciales PVA, Ethenol®, Poval®, Acroflex®, Airvol®, Alcotex® ou Aquafilm®.

Parmi ces polymères, on préfère tout particulièrement utiliser des polymères faiblement adsorbants tels que le polyoxyéthylène, le dextrane, la polyvinylpyrrolidone (PVP), les polymères di-blocs oxyéthylénés tels que les polymères vendus sous la dénomination commerciale Varonic® par la société Degussa-Goldschmidt, les copolymères blocs à base d'oxyde d'éthylène et d'oxyde de propylène tels que les polymères vendus par la société BASF sous les dénominations commerciales Pluronic® et Lutrol® et leurs équivalents hydrosolubles, les copolymères tri-blocs hydrosolubles, c'est-à-dire les copolymères composés de blocs hydrophile-hydrophobe-hydrophile tels que les produits vendus sous les dénominations Méthyl-Oxyrane, copolymère EOPO, Pluronic®, Antarox®, Arcol®, Daltocel®, Dowfax® et leurs analogues comportant du polystyrène comme groupement hydrophobe.

Lorsqu'ils sont utilisés, ces polymères représentent de préférence de 50 à 400%, et encore plus particulièrement de 100 à 200%, en poids par rapport au poids total de la vésicule.

L'enrobage des vésicules de l'invention n'est pas nécessaire mais peut être utile lorsque l'on souhaite les introduire dans un milieu fortement chargé en sels, afin d'assurer leur stabilité.

L'invention a également pour objet l'utilisation d'au moins une vésicule telle que décrite ci-dessus, pour encapsuler des principes actifs du type molécules organiques hydrosolubles, ces dernières pouvant être utilisées pour la formulation d'espèces actives dans des compositions cosmétiques ou pharmaceutiques.

Une composition cosmétique comprenant au moins une vésicule telle que décrite ci-dessus constitue un autre objet de l'invention.

Une composition pharmaceutique comprenant au moins une vésicule telle que décrite ci-dessus constitue également un autre objet de l'invention.

Enfin, l'invention concerne un procédé de guidage par magnétophorèse de vésicules catanioniques selon l'invention, ledit procédé comprenant au moins une étape de guidage desdites vésicules catanioniques par application d'un gradient de champ magnétique permanent, la valeur dudit gradient étant positif, non nul et fonction de l'application finale visée. Lorsque les vésicules catanioniques comprennent au moins un soluté encapsulé dans leur cavité interne, ledit soluté étant de préférence un principe actif, le procédé peut en outre comprendre une étape de libération dudit soluté par application d'un champ magnétique oscillant.

Outre les dispositions qui précèdent, l'invention comprend encore d'autres dispositions qui ressortiront du complément de description qui suit, qui se rapporte à des exemples mettant en évidence les propriétés avantageuses des vésicules de l'invention, ainsi qu'aux figures annexées dans lesquelles :

- la Figure 1 est une courbe d'aimantation de nanoparticules magnétiques selon l'invention,
- la Figure 2 représente des nanoparticules magnétiques selon l'invention observée par microscopie électronique en transmission,
- la Figure 3 représente la courbe de potentiel zêta de nanoparticules magnétiques selon l'invention en fonction du pH,
- la Figure 4A représente des vésicules selon l'invention observées à l'aide d'un microscope inverse confocal (Olympus, IX 81 + FV 1000) après excitation à 488 nm et filtrage de l'émission dans la gamme 505-525 nm, et la Figure 4B des vésicules selon l'invention observées à l'aide d'un microscope optique en transmission,
- la Figure 5 est une image prise au microscope électronique en transmission en mode environnemental dans l'eau (wet-STEM),
- la Figure 6 représente des images du culot d'une préparation de vésicules selon l'invention observées en microscopie confocale (Figure 6A) et en microscopie optique (Figure 6B),
- la Figure 7 représente des images du surnageant d'une préparation de vésicules selon l'invention observées en microscopie confocale (Figure 7A) et en microscopie optique (Figure 7B),
- la Figure 8 représente des images du surnageant d'une préparation de vésicules selon l'invention, en fonction du temps. Les images de gauche ont été observées en microscopie optique confocale après ajout d'Oregon Green®, et celles de droite en microscopie optique en transmission,
- la Figure 9 est une image d'un fragment de gel de vésicule selon l'invention observée par microscopie confocale,
- la Figure 10 représente des images de gel de vésicules selon l'invention observée par microscopie électronique,
- la Figure 11 représente des images observées en microscopie confocale d'un mélange de nanoparticules et de proto-vésicules selon l'invention avant dialyse, imperméable à l'Oregon Green® (Figure 11A) et à la Rhodamine 6G (Figure 11B),
- la Figure 12 représente des images observées en microscopie confocale d'un gel de vésicules selon l'invention, imperméables à l'Oregon Green® (Figure 12A) et à la Rhodamine 6G (Figure 12B),
- la Figure 13 représente des vésicules catanioniques selon l'invention encapsulant de la Rhodamine 6G observées en microscopie confocale,

- la Figure 14 représente des vésicules catanioniques selon l'invention encapsulant de la Rhodamine 6G (après centrifugation) observées en microscopie confocale,
- la Figure 15 représente des vésicules catanioniques selon l'invention encapsulant des nanoparticules magnétiques, observées en microscopie optique. La Figure 15A montre les vésicules en l'absence de champ magnétique, et la Figure 15B les vésicules lorsqu'un champ magnétique statique est appliqué,
- la Figure 16 représente des vésicules catanioniques selon l'invention encapsulant des nanoparticules magnétiques, observées en microscopie électronique en transmission,
- la Figure 17 est une image de microscopie confocale de vésicules catanioniques selon l'invention, encapsulant un mélange de nanoparticules magnétiques et de Rhodamine 6G,
- La Figure 18 montre le comportement de vésicules catanioniques selon l'invention encapsulant des nanoparticules magnétiques, sous l'action d'un gradient de champ magnétique statique (micromagnétophorèse),
- La Figure 19 montre le comportement de vésicules catanioniques selon l'invention encapsulant de la Rhodamine 6G sous l'action d'un gradient de champ magnétique statique (micromagnétophorèse),
- La Figure 20 montre la libération de Rhodamine 6G déclenchée magnétiquement, observée par microscopie confocale. La Figure 20A représente des vésicules catanioniques selon l'invention encapsulant de la Rhodamine 6G. La Figure 20B montre les mêmes vésicules après stimulation magnétique. La Figure 20C montre les mêmes vésicules après stimulation magnétique et ajout de Rhodamine 6G à l'extérieur.

**PARTIE EXPERIMENTALE**

Exemple 1 : Synthèse des nanoparticules magnétiques

180 g de $FeCl_2$, 4 $H_2O$ et 100 m de HCl à 37% sont dissous dans 500 mL d'eau distillée, puis ajoutés à 715 mL de $FeCl_3$ à 27%. Le mélange est complété à 3 L avec de l'eau, puis mis sous agitation à 800 tours/min. La précipitation des nanoparticules de magnétite $Fe_3O_4$ est obtenue par ajout rapide d'une base forte, de l'ammoniaque ($NH_3$, 1 L à 20%), sous agitation pendant une durée de 30 minutes. Les nanoparticules magnétiques sont ensuite décantées sur des plaques magnétiques pendant 10 minutes, ceci afin de les séparer du surnageant. Le précipité est lavé à l'eau distillée. On ajoute ensuite 360 mL de $HNO_3$ à 52,5%, puis le volume total est complété à 2 L avec de l'eau. La dispersion est laissée 30 minutes sous agitation avant décantation. Les nanoparticules de magnétite $Fe_3O_4$ obtenues sont ensuite oxydées en maghémite $\gamma$-$Fe_2O_3$ par ajout de 323 g de $Fe(NO_3)_3$, 9 $H_2O$ dans 800 mL d'eau distillée, puis le mélange est porté à ébullition et maintenu à une température de 90°C pendant 30 minutes. Les nanoparticules magnétiques sont ensuite acidifiées par ajout de 360 mL de $HNO_3$, agitées pendant 10 minutes, puis décantées. Les nanoparticules magnétiques ainsi obtenues sont porteuses de charges positives. Une dernière étape est réalisée : le précipité est lavé soigneusement avec différents solvants, puis décanté par décantations magnétiques successives (3* 1 L d'acétone et 2*500 mL d'éther), redispersé dans l'eau, et enfin l'éther résiduel est évacué par un léger chauffage à 35°C.
La concentration finale en nanoparticules magnétiques est de 1,43 M. Le dosage est réalisé par spectroscopie d'absorption atomique.
La courbe d'aimantation des nanoparticules magnétiques (Figure 1) démontre que les nanoparticules ont un comportement super-paramagnétique.
Le diamètre des nanoparticules magnétiques mesuré par microscopie électronique en transmission est de 7 nm (Figure 2).
Le point isoélectrique des nanoparticules est déterminé à l'aide d'une courbe de titration du potentiel zêta en fonction du pH (Figure 3). Il se situe à pH = 7,4. Les particules commencent à se déstabiliser vers pH = 6,5 (potentiel zêta < 20 mV).

Exemple 2: Préparation d'une solution de vésicules catanioniques selon l'invention

31,6 mg de bromure de cétyltriméthylammonium (CTABr), 38,4 mg d'acide myristique et 6,93 g de la solution de nanoparticules magnétiques préparée à l'exemple 1 diluée à 0,1 M dans une solution d'acide nitrique $HNO_3$ à $10^{-2}$ M sont mélangés, puis/portés à une température de 50°C sous agitation pendant 69 heures. Cette solution est ensuite diluée par un facteur 3 avec de l'eau préalablement chauffée à 50°C, puis maintenue à cette température pendant 30 minutes. La solution est ensuite mise à dialyser contre de l'eau MilliQ (volume de solution/volume du bain = 100) dans un tube de dialyse de poids moléculaire inférieur ou égal à 8-10 kDa. Le bain de dialyse est renouvelé toutes les heures pendant 8 heures, puis toutes les 12 heures pendant les 6 jours suivants.
Après marquage à l'Oregon Green® (solution saturée diluée à 5%), les vésicules sont observées à l'aide d'un microscope inverse confocal (Olympus, IX 81 + FV 1000) après excitation à 488 nm et filtrage de l'émission dans la gamme 505-525 nm (Figure 4A). Les ronds noirs correspondent aux vésicules de l'invention sur lesquelles sont fixées des nanoparticules magnétiques ; elles restent imperméables au colorant (pas de fluorescence à l'intérieur des vésicules). Lesdites vésicules sont également visibles en microscopie optique en transmission sous forme d'anneaux (Figure 4B). La fixation des nanoparticules magnétiques à la surface des vésicules est également observée par microscopie électronique en transmission en mode environnemental dans l'eau (wet-STEM) (Figure 5).

Exemple 3 : Préparation d'une solution de vésicules catanioniques selon l'invention, puis élimination des nanoparticules en excès et faible précipitation des nanoparticules internes

Une solution de vésicules catanioniques selon l'invention avec des nanoparticules magnétiques en excès est préparée selon l'exemple 2 ci-dessus. L'excès de nanoparticules est ensuite éliminé par centrifugation (2000 tours par minute, R = 8 cm pendant 20 minutes). Le culot contient l'excès de nanoparticules agrégées, visibles en microscopie confocale sous forme d'agrégats fluorescents (Figure 6A) ou directement en microscopie optique (Figure 6B). Le surnageant contient les vésicules magnétiques de l'invention. Après quelques jours de vieillissement, les nanoparticules encapsulées dans les vésicules deviennent visibles par microscopie optique sous forme d'un agrégat unique qui est soumis à une agitation brownienne, tandis que les nanoparticules magnétiques restent fixées sur la paroi des vésicules (Figure 7A). Les vésicules selon l'invention encapsulant des nanoparticules magnétiques restent imperméables à l'Oregon Green® ajouté (5% d'une solution saturée), comme on peut l'observer par microscopie confocale (Figure 7B).

Exemple 4 : Préparation d'une solution de vésicules catanioniques selon l'invention, puis élimination des nanoparticules en excès et forte précipitation des nanoparticules internes

126,3 mg de bromure de cétyltriméthylammonium (CTABr), 153,7 mg d'acide myristique et 6,72 g de la solution de nanoparticules magnétiques préparée à l'exemple 1 diluée à 0,1 M dans une solution d'acide nitrique $HNO_3$ à $10^{-2}$ M sont mélangés, puis portés à une température de 50°C sous agitation pendant 69 heures. Cette solution est ensuite diluée par un facteur 12 avec de l'eau préalablement chauffée à 50°C, puis maintenue à 50°C pendant 30 minutes. La solution est ensuite mise à dialyser contre de l'eau MilliQ (volume de solution/volume du bain = 100) dans un tube de dialyse de poids moléculaire inférieur ou égal à 8-10 kDa. Le bain de dialyse est renouvelé toutes les heures pendant 8 heures, puis toutes les 12 heures pendant les 6 jours suivants.

L'excès de nanoparticules est ensuite éliminé par centrifugation (2000 tours par minute, R = 8 cm pendant 20 minutes). Le surnageant contient les vésicules catanioniques de l'invention sur lesquelles sont fixées les nanoparticules magnétiques. Après une semaine de vieillissement, les nanoparticules encapsulées dans les vésicules deviennent visibles par microscopie optique sous forme de plusieurs agrégats soumis à une agitation brownienne, tandis que les nanoparticules magnétiques restent fixées sur les parois des vésicules (Figure 8).

Exemple 5 : Préparation d'un gel de vésicules catanioniques selon l'invention avec une forte densité de nanoparticules magnétiques

29,2 mg de chlorure de cétyltriméthylammonium (CTAC1), 40,2 mg d'acide myristique et 6,92 g d'une solution de nanoparticules magnétiques telle que préparée à l'exemple 1 diluée à 122 mM dans une solution d'acide nitrique $HNO_3$ à $10^{-2}$ M sont mélangés, puis portés à une température de 50°C sous agitation pendant 66 heures. La solution est mise à dialyser contre de l'eau MilliQ (volume de solution/volume du bain = 3/500) dans un tube de dialyse de poids moléculaire 8-10 kDa. Le bain de dialyse est renouvelé après 45 minutes, 2h30, 8h30, 26h, 47h et 56h10 de dialyse, puis la dialyse est arrêtée au bout de 120 heures. Au cours de la dialyse, la solution prend en masse sous l'effet du gonflement des vésicules. En fin de dialyse, on récupère alors les vésicules sphériques, imperméables à la Rhodamine 6G et à l'Oregon Green®, qui forment un empilement compact et se présentent sous la forme d'un gel visqueux. Aucune évolution notable des vésicules n'est observée par microscopie confocale après 6 mois de vieillissement à température ambiante (Figure 9). En microscopie électronique à transmission, après séchage sur une grille de carbone, on observe l'arrangement des nanoparticules magnétique à la surface des vésicules catanioniques qui forment un réseau dense (Figure 10A). Les traces de séchage de certaines vésicules individuelles qui se sont détachées après la dilution du gel nécessaire à l'observation est également observable (Figure 10B).

Exemple 6 : Préparation d'un gel de vésicules catanioniques selon l'invention avec une faible densité de nanoparticules magnétiques, puis décantation intermédiaire

14,4 mg de chlorure de cétyltriméthylammonium (CTAC1), 15,6 mg d'acide myristique et 2,66 g de la solution de nanoparticules magnétiques préparée à l'exemple 1 diluée à 12,1 mM dans une solution d'acide nitrique $HNO_3$ à $10^{-2}$ M sont mélangés, puis portés à une température de 50°C sous agitation pendant 66 heures. La solution est laissée à décanter pendant un mois en présence d'un barreau magnétique. On observe sur le barreau aimanté la formation d'une pâte brune qui contient les nanoparticules en excès. Le surnageant est une solution fluide qui contient des proto-vésicules (vésicules allongées) imperméables à l'Oregon Green® (solution saturée à 5%) (Figure 11A) et à la Rhodamine 6G (10 $\mu$M) (Figure 11B) comme observé par microscopie confocale. Ce surnageant est mis à dialyser contre de l'eau MilliQ (volume de solution/volume du bain = 3/500) dans un tube de dialyse de poids moléculaire 8-10 kDa. Le bain de dialyse est renouvelé toutes les heures pendant 8 heures, puis deux fois par jour pendant les 4 jours suivants. Au cours de la dialyse, la solution prend en masse sous l'effet du gonflement des vésicules. En fin de dialyse, on récupère les vésicules sphériques, imperméables à l'Oregon Green® (Figure 12A) et à la Rhodamine 6G (Figure 12B), qui forment un empilement compact et se présentent sous la forme d'un gel visqueux.

Exemple 7 : Préparation d'une solution de vésicules catanioniques selon l'invention encapsulant de la Rhodamine 6G

31,6 mg de bromure de cétyltriméthylammonium (CTABr), 38,4 mg d'acide myristique sont introduits dans un flacon en verre. 6,93 g d'une solution de nanoparticules magnétiques préparée à l'exemple 1 et diluée à 0,1 M dans une solution d'acide nitrique $HNO_3$ à $10^{-2}$ M et contenant de la Rhodamine 6G à 10 $\mu$M sont ajoutés, puis l'ensemble est porté à une température de 50°C sous agitation pendant 69 heures. Cette solution est ensuite diluée par un facteur 3 avec de l'eau préalablement chauffée à 50°C puis gardée à 50°C pendant 30 minutes. La solution est ensuite mise à dialyser contre de l'eau MilliQ (volume de solution/volume du bain = 100) dans un tube de dialyse de poids moléculaire 8-10 kDa. Le bain de dialyse est renouvelé toutes les heures pendant 8 heures, puis deux fois par jour pendant les 6 jours suivants.

On observe par microscopie confocale que la Rhodamine 6G reste encapsulée à l'intérieur des vésicules catanioniques, sans perte notable de fluorescence au cours des trois semaines qui suivent (Figure 13). L'excès de nanoparticules magnétique peut être éliminé par centrifugation (2000 tours/min, R = 8 cm pendant 20 minutes). Les vésicules récupérées à l'issu de l'étape de centrifugation contiennent toujours la Rhodamine 6G (Figure 14).

Exemple 8 : Préparation d'une solution fluide de vésicules catanioniques selon l'invention encapsulant des nanoparticules magnétiques, puis élimination des nanoparticules en excès

31,6 mg de bromure de cétyltriméthylammonium (CTABr), 38,4 mg d'acide myristique et 6,93 g de la solution de nanoparticules magnétiques préparée à l'exemple 1 diluée à 2,2 M dans une solution d'acide nitrique $HNO_3$ à $10^{-2}$ M sont mélangés, puis portés à une température de 50°C sous agitation pendant 69 heures. Cette solution est ensuite diluée par un facteur 3 avec de l'eau préalablement chauffée à 50°C, puis maintenue à cette température pendant 30 minutes. La solution est ensuite mise à dialyser contre de l'eau MilliQ (volume de solution/volume du bain = 100) dans un tube de dialyse de poids moléculaire inférieur ou égal à 8-10 kDa. Le bain de dialyse est renouvelé toutes les heures pendant 8 heures, puis toutes les 12 heures pendant les 6 jours suivants.

L'excès de nanoparticules est ensuite éliminé par centrifugation (2000 tours par minute, R = 8 cm pendant 20 minutes). Le culot contient les vésicules catanioniques selon l'invention, encapsulant des nanoparticules magnétiques stables.

Les vésicules catanioniques de l'invention sont observées en microscopie optique en transmission. Elles apparaissent sous forme de cercles remplis de nanoparticules magnétiques de couleur caractéristique marron (Figure 15A). Ces vésicules forment des chaînes lorsqu'un aimant permanent est approché de l'échantillon (Figure 15B).

La fixation et/ou l'encapsulation des nanoparticules magnétiques à la surface des vésicules catanioniques a également été observée par microscopie électronique à transmission à la Figure 16.

Exemple 9 : Préparation d'une solution de vésicules catanioniques selon l'invention, encapsulant des nanoparticules magnétiques et de la Rhodamine 6G

31,6 mg de bromure de cétyltriméthylammonium (CTABr) et 38,4 mg d'acide myristique sont introduits dans un flacon en verre. 6,93 g d'une solution de nanoparticules magnétiques préparée à l'exemple 1 et diluée à 2,2 M dans une solution d'acide nitrique $HNO_3$ à $10^{-2}$ M et contenant de la Rhodamine 6G à 10 $\mu$M sont ajoutés, puis l'ensemble est porté à une température de 50°C sous agitation pendant 69 heures. Cette solution est ensuite diluée par un facteur 3 avec de l'eau préalablement chauffée à 50°C, puis maintenue à 50°C pendant 30 minutes. La solution est ensuite mise à dialyser contre de l'eau MilliQ (volume de solution/volume du bain = 100) dans un tube de dialyse de poids moléculaire 8-10 kDa. Le bain de dialyse est renouvelé toutes les heures pendant 8 heures, puis deux fois par jour pendant les 6 jours suivants.

On observe par microscopie confocale que la Rhodamine 6G reste encapsulée à l'intérieur des vésicules catanioniques magnétiques (Figure 17). L'excès de nanoparticules magnétiques peut être éliminé par centrifugation (2000 tours/min, R = 8 cm pendant 20 minutes). Les vésicules récupérées à l'issue de l'étape de centrifugation contiennent toujours la Rhodamine 6G.

Exemple 10 : Comportement des vésicules catanioniques selon l'invention encapsulant des nanoparticules magnétiques, en présence d'un gradient de champ magnétique (micromagnétophorèse)

Les vésicules magnétiques décrites à l'exemple 8 sont introduites entre deux lamelles de microscopie sur lesquelles est fixée l'extrémité d'un fil de nickel de diamètre 250 μm. Un aimant permanent est approché à quelques centimètres de la cellule. On observe en microscopie optique en transmission, une migration rapide, puis une accumulation des vésicules magnétiques sur le fil de nickel aimanté, facilement observable grâce à la coloration marron des vésicules encapsulées (Figure 18).

Exemple 11 : Comportement des vésicules catanioniques selon l'invention encapsulant la Rhodamine 6G, sous l'action d'un gradient de champ magnétique (micromagnétophorèse)

Les vésicules magnétiques décrites à l'exemple 7 sont introduites entre deux lamelles de microscopie sur lesquelles est fixée l'extrémité d'un fil de nickel de diamètre 250 μm. Un aimant permanent est approché à quelques centimètres de la cellule, ce qui crée un champ magnétique de 195 T/m. On observe en microscopie confocale une migration progressive des vésicules magnétiques fluorescentes vers le fil de nickel, à une vitesse de 50 μm/s (Figure 19).

Exemple 12 : Libération de la Rhodamine 6G encapsulée dans des vésicules catanioniques selon l'invention par hyperthermie

La libération de la Rhodamine 6G (10 μM) est suivie par microscopie confocale. 300 μL de la solution de vésicules catanioniques décrites à l'exemple 7 ou à l'exemple 9 (Figure 20A) sont introduites dans un eppendorf de 500 μL et soumises à un champ magnétique oscillant (28 kA/m, 520 kHz) pendant une durée de 30 minutes. Le chauffage de la solution atteint au maximum 41,5°C. Après arrêt du champ magnétique, les vésicules vidées de leur contenu sont observables à température ambiante (Figure 20B). Un léger ajout de Rhodamine 6G à la solution permet de révéler des ronds noirs, caractéristiques des vésicules redevenues imperméables (Figure 20C).

## Revendications

1. Vésicules non poreuses en dispersion dans une composition aqueuse désignée phase externe dont les parois, qui définissent une phase interne, sont constituées d'un mélange d'au moins un tensioactif anionique et d'au moins un tensioactif cationique, **caractérisées en ce que** des nanoparticules magnétiques sont fixées sur les parois desdites vésicules.

2. Vésicules selon la revendication 1, **caractérisées en ce que** lesdites nanoparticules magnétiques sont fixées sur les faces interne et externe desdites vésicules.

3. Vésicules selon la revendication 1 ou la revendication 2, **caractérisées en ce qu'**elles comprennent également des nanoparticules magnétiques encapsulées au sein de leur cavité interne.

4. Vésicules selon l'une des revendications 1 à 3, **caractérisées en ce que** lesdites nanoparticules magnétiques sont choisis parmi les nanoparticules d'oxyde de fer magnétiques $Fe_2O_3$ ou $Fe_3O_4$, ou les nanoparticules d'oxyde mixtes $CoFe_2O_4$ ou $Ni_xMn_{1-x}Fe_2O_4$ où x varie de 0 à 1, lesdites nanoparticules magnétiques étant de préférence des nanoparticules de maghémite $\gamma$-$Fe_2O_3$.

5. Vésicules selon l'une des revendications 1 à 4, **caractérisées en ce que** lesdites nanoparticules magnétiques ont un diamètre allant de 5 à 50 nm.

6. Vésicules selon l'une quelconque des revendications 1 à 5, **caractérisées en ce que** ledit tensioactif cationique est choisi parmi ceux qui comportent un groupement polaire cationique et au moins une chaîne alkyle ou aryle ou aralkyle, saturée ou insaturée, ayant de 8 à 30 atomes de carbone et éventuellement interrompue par une fonction ester ou éther, et ledit tensioactif anionique est choisi parmi ceux qui comportent un groupement polaire anionique et au moins une chaîne alkyle en $C_8$-$C_{30}$ éventuellement substituée par un ou plusieurs groupements hydroxyle et un ou plusieurs atomes d'halogène ou de deutérium, ledit tensioactif cationique étant de préférence choisi parmi les ammoniums mono- et bicaténaires répondant aux formules (I) et (I') suivantes et les bases correspondantes :

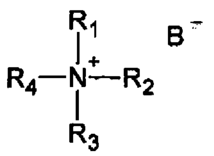 (I) 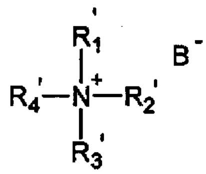 (I')

dans lesquelles :

- $R_1$, $R_2$, $R_3$, $R'_1$ et $R'_2$, identiques ou différents, représentent un groupement choisi parmi : H, un alkyle en $C_1$-$C_4$, un hydroxyalkyle en $C_1$-$C_4$ ou un alkyl($C_1$-$C_4$)éther,
- $R_4$, $R'_3$ et $R'_4$, identiques ou différents, représentent un groupement choisi parmi : une chaîne hydrocarbonée saturée ou insaturée en $C_8$-$C_{24}$, un benzyle, un aralkyle en $C_8$-$C_{24}$ ou un groupement alkyl($C_4$-$C_{20}$)ester d'alkyle($C_4$-$C_{20}$),
- $B^-$ représente un ion pouvant être choisi parmi : $OH^-$, $F^-$, $Cl^-$, $Br^-$, $I^-$, $BF_4^-$, $SO_4^{2-}$, et

ledit tensioactif anionique étant de préférence choisi parmi les acides carboxyliques à chaîne alkyle $C_8$-$C_{24}$ ou hydroxyalkyle en $C_8$-$C_{24}$, ou fluoroalkyle en $C_8$-$C_{24}$, les acides di-carboxyliques à chaîne hydrophobe carbonée en $C_8$-$C_{24}$, les phosphates, les sulfates et les sulfonates comportant une ou deux chaînes alkyles en $C_8$-$C_{24}$.

7. Vésicules selon l'une des revendications 1 à 6, **caractérisées en ce qu'**elles ont diamètre compris entre 0,1 et 100 μm.

8. Vésicules selon l'une des revendications 1 à 7, **caractérisées en ce qu'**elles comportent un soluté encapsulé dans leur cavité interne.

9. Procédé pour la préparation d'une dispersion de vésicules en milieu aqueux selon l'une des revendications 1 à 8, **caractérisé en ce qu'**il comprend les étapes suivantes :

i) le mélange d'au moins un tensioactif anionique et d'au moins un tensioactif cationique, avec une solution de nanoparticules magnétiques, ledit mélange étant réalisé en milieu acide à un pH compris entre 1 et 4, de préférence pendant une durée de 1 à 3 jours, les nanoparticules magnétiques et les proto-vésicules catanioniques formées au cours de cette étape étant de mêmes charges,
ii) optionnellement, la dilution de la suspension obtenue lors de l'étape i) dans une solution aqueuse pure ou dans une solution aqueuse comprenant des solutés, à une température pouvant optionnellement varier de 5 à 95,
iii) optionnellement, l'élimination d'une partie des nanoparticules magnétiques par centrifugation, décantation ou tri magnétique,
iv) la dialyse de la suspension à un pH compris entre 5 et 7, de préférence à un pH = 6 pour gonfler les proto-vésicules formées en vésicules catanioniques sphériques et annuler et/ou inverser les charges des nanoparticules magnétiques, et
v) optionnellement, l'élimination des nanoparticules magnétiques en excès par centrifugation, décantation ou tri magnétique.

10. Procédé selon la revendication 9, **caractérisé en ce que** l'on ajoute lors de l'étape i) un soluté à encapsuler.

11. Procédé selon la revendication 9 ou la revendication 10, **caractérisé en ce que** les vésicules sont stabilisées par au moins un polymère adsorbé sur leur surface.

12. Utilisation de vésicules selon l'une des revendications 1 à 8 pour encapsuler des principes actifs.

13. Composition cosmétique ou pharmaceutique comprenant au moins une vésicule catanionique selon l'une des revendications 1 à 8.

14. Procédé de guidage de vésicules catanioniques telles que définies selon l'une des revendications 1 à 8, **caractérisé en ce qu'**il comprend au moins une étape de guidage desdites vésicules catanioniques par application d'un gradient de champ magnétique permanent.

15. Procédé selon la revendication 14 dans lequel les vésicules catanioniques comprennent au moins un soluté encapsulé dans leur cavité interne, ledit soluté étant de préférence un principe actif, et **caractérisé en ce que** ledit procédé comprend une étape de libération dudit soluté par application d'un champ magnétique oscillant.

## Patentansprüche

1. Nichtporöse Vesikel in Dispersion in einer wässrigen Zusammensetzung als äußerer Phase, deren Wände, die eine innere Phase definieren, aus einer Mischung von wenigstens einem anionischen Tensid und wenigstens einem kationischen Tensid gebildet sind, **dadurch gekennzeichnet, dass** auf den Wänden der Vesikel magnetische Nanopartikel gebunden sind.

2. Vesikel nach Anspruch 1, **dadurch gekennzeichnet, dass** die magnetischen Nanopartikel auf den Innen- und Außenseiten der Vesikel gebunden sind.

3. Vesikel nach Anspruch 1 oder Anspruch 2, **dadurch gekennzeichnet, dass** sie in ihrem inneren Hohlraum auch verkapselte magnetische Nanopartikel umfassen.

4. Vesikel nach einem der Ansprüche 1 bis 3, **dadurch gekennzeichnet, dass** die magnetischen Nanopartikel ausgewählt sind aus magnetischen $Fe_2O_3$- oder $Fe_3O_4$-Eisenoxidnanopartikein oder $CoFe_2O_4$- oder $Ni_xMn_{1-x}Fe_2O_4$-Mischoxidnanopartikeln, wobei x von 0 bis 1 variiert, wobei die magnetischen Nanopartikel vorzugsweise $\gamma$-$Fe_2O_3$-Maghemit-Nanopartikel sind.

5. Vesikel nach einem der Ansprüche 1 bis 4, **dadurch gekennzeichnet, dass** die magnetischen Nanopartikel einen Durchmesser von 5 bis 50 nm haben.

6. Vesikel nach einem der Ansprüche 1 bis 5, **dadurch gekennzeichnet, dass** das kationische Tensid ausgewählt ist aus solchen, die eine polare kationische Gruppe und wenigstens eine gesättigte oder ungesättigte Alkyl- oder Aryl- oder Aralkylkette tragen, die 8 bis 30 Kohlenstoffatome aufweist und gegebenenfalls von einer Ester oder Etherfunktion unterbrochen ist, und das anionische Tensid ausgewählt ist aus solchen, die eine polare anionische Gruppe und wenigstens eine gegebenenfalls durch ein oder mehrere Hydroxygruppen und ein oder mehrere Halogen- oder Deuteriumatome substituierte $C_8$-$C_{30}$-Alkylkette tragen, wobei das kationische Tensid vorzugsweise ausgewählt ist aus ein- und zweikettigem Ammonium der folgenden Formeln (I) und (I') und den korrespondierenden Basen:

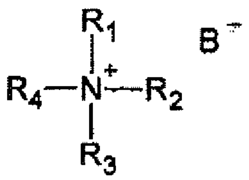 (I) 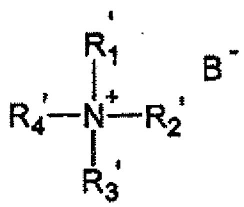 (I')

worin

- $R_1$, $R_2$, $R_3$, $R'_1$ und $R'_2$, die gleich oder verschieden sind, eine Gruppe bedeuten, die ausgewählt ist aus: H, $C_1$-$C_4$-Alkyl, $C_1$-$C_4$-Hydroxyalkyl oder $C_1$-$C_4$-Alkylether,
- $R_4$, $R'_3$ und $R'_4$, die gleich oder verschieden sind, eine Gruppe bedeuten, die ausgewählt ist aus: einer gesättigten oder ungesättigten $C_8$-$C_{24}$-Kohlenwasserstoffkette, Benzyl, $C_8$-$C_{24}$-Aralkyl oder einer $C_4$-$C_{20}$-Alkyl-$C_4$-$C_{20}$-alkylestergruppe,
- $B^-$ ein Ion bedeutet, das ausgewählt sein kann aus: $OH^-$, $F^-$, $Cl^-$, $Br^-$, $I^-$, $BF_4^-$, $SO_4^{2-}$, und

wobei das anionische Tensid vorzugsweise ausgewählt ist aus Carbonsäuren mit $C_8$-$C_{24}$-Alkyl- oder $C_8$-$C_{24}$-Hydroxyalkyl- oder $C_8$-$C_{24}$-Fluoralkylketten, Dicarbonsäuren mit hydrophober $C_8$-$C_{24}$-Kohlenstoffkette, Phosphaten, Sulfaten und Sulfonaten, die ein oder zwei $C_8$-$C_{24}$-Alkylketten tragen.

7. Vesikel nach einem der Ansprüche 1 bis 6 **dadurch gekennzeichnet, dass** sie einen Durchmesser zwischen 0,1 und 100 $\mu$m haben.

**8.** Vesikel nach einem der Ansprüche 1 bis 7, **dadurch gekennzeichnet, dass** sie in ihrem inneren Hohlraum ein verkapseltes Solut umfassen.

**9.** Verfahren zur Herstellung einer Vesikeldispersion in wässrigem Medium nach einem der Ansprüche 1 bis 8, **dadurch gekennzeichnet, dass** es die folgenden Schritte umfasst:

i) Mischen wenigstens eines anionischen Tensids und wenigstens eines kationischen Tensids mit einer Lösung magnetischer Nanopartikel, wobei das Mischen, vorzugsweise 1 bis 3 Tage lang, in saurem Milieu bei einem pH zwischen 1 und 4 erfolgt, wobei die magnetischen Nanopartikel und die bei diesem Schritt gebildeten katanionischen Protovesikel die gleichen Ladungen haben,
ii) wahlweise Verdünnen der bei Schritt i) erhaltenen Suspension in einer reinen wässrigen Lösung oder in einer Solute umfassenden wässrigen Lösung bei einer Temperatur, die wahlweise von 5 bis 95 variieren kann,
iii) wahlweise Entfernen eines Teils der magnetischen Nanopartikel durch Zentrifugation, Dekantieren oder Magnetsortierung,
iv) Dialyse der Suspension bei einem pH zwischen 5 und 7, vorzugsweise bei pH = 6, um die gebildeten Protovesikel zu sphärischen katanionischen Vesikeln zu quellen und die Ladungen der magnetischen Nanopartikel zu beseitigen und/oder umzukehren, und
v) wahlweise Entfernen der überschüssigen magnetischen Nanopartikel durch Zentrifugation, Dekantieren oder Magnetsortierung.

**10.** Verfahren nach Anspruch 9, **dadurch gekennzeichnet, dass** man bei Schritt i) ein zu verkapselndes Solut zusetzt.

**11.** Verfahren nach Anspruch 9 oder Anspruch 10, **dadurch gekennzeichnet, dass** die Vesikel durch wenigstens ein an ihrer Oberfläche adsorbiertes Polymer stabilisiert werden.

**12.** Verwendung von Vesikeln nach einem der Ansprüche 1 bis 8 zum Verkapseln von Wirkstoffen.

**13.** Kosmetische oder pharmazeutische Zusammensetzung, umfassend wenigstens ein katanionisches Vesikel nach einem der Ansprüche 1 bis 8.

**14.** Verfahren zum Leiten von katanionischen Vesikeln gemäß einem der Ansprüche 1 bis 8, **dadurch gekennzeichnet, dass** es wenigstens einen Leitschritt der katanionischen Vesikel durch Anlegen eines permanenten Magnetfeldgradienten umfasst.

**15.** Verfahren nach Anspruch 14, wobei die katanionischen Vesikel in ihrem inneren Hohlraum wenigstens ein verkapseltes Solut umfassen, wobei das Solut vorzugsweise ein Wirkstoff ist, und dadurch gekenntzeichnet, dass das Verfahren einen Schritt der Freisetzung des Soluts durch Anlegen eines oszillierenden Magnetfelds umfasst.

## Claims

**1.** Non-porous vesicles in dispersion in an aqueous composition called the external phase, the walls of which vesicles, which define an internal phase, are composed of a mixture of at least one anionic surfactant and at least one cationic surfactant, **characterised in that** magnetic nanoparticles are fixed to the walls of said vesicles.

**2.** Vesicles according to claim 1, **characterised in that** said magnetic nanoparticles are fixed to the inner and outer faces of said vesicles.

**3.** Vesicles according to claim 1 or claim 2, **characterised in that** they also comprise magnetic nanoparticles encapsulated within their internal cavity.

**4.** Vesicles according to any one of claims 1 to 3, **characterised in that** said magnetic nanoparticles are chosen from magnetic nanoparticles of iron oxide $Fe_2O_3$ or $Fe_3O_4$, or nanoparticles of mixed oxides $CoFe_2O_4$ or $Ni_xMn_{1-x}Fe_2O_4$ wherein x varies from 0 to 1, said magnetic nanoparticles preferably being nanoparticles of maghemite $\gamma$-$Fe_2O_3$.

**5.** Vesicles according to any one of claims 1 to 4, **characterised in that** said magnetic nanoparticles have a diameter ranging from 5 to 50 nm.

**6.** Vesicles according to any one of claims 1 to 5, **characterised in that** said cationic surfactant is chosen from those which comprise a polar cationic group and at least one alkyl or aryl or aralkyl chain, saturated or unsaturated, having from 8 to 30 carbon atoms and optionally interrupted by an ester or ether functional group, and said anionic surfactant is chosen from those which comprise a polar anionic group and at least one $C_8$-$C_{30}$-alkyl chain optionally substituted by one or more hydroxyl groups and one or more halogen or deuterium atoms, said cationic surfactant preferably being chosen from the mono- and bi-catenary ammoniums having the following formulae (I) and (I') and the corresponding bases:

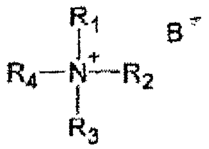 (I) 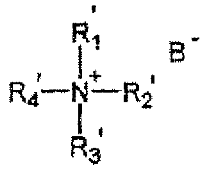 (I')

wherein:

- $R_1$, $R_2$, $R_3$, $R'_1$ and $R'_2$, which are identical or different, represent a group chosen from: H, a $C_1$-$C_4$-alkyl, a $C_1$-$C_4$-hydroxyalkyl or a ($C_1$-$C_4$)-alkyl ether,
- $R_4$, $R'_3$ and $R'_4$, which are identical or different, represent a group chosen from: a saturated or unsaturated $C_8$-$C_{24}$-hydrocarbon chain, a benzyl, a $C_8$-$C_{24}$-aralkyl or a ($C_4$-$C_{20}$)-alkyl ($C_4$-$C_{20}$)-alkyl ester group,
- $B^-$ represents an ion which may be chosen from: $OH^-$, $F^-$, $Cl^-$, $Br^-$, $I^-$, $SF_4^-$, $SO_4^{2-}$, and said anionic surfactant preferably being chosen from carboxylic acids having a $C_8$-$C_{24}$-alkyl or $C_8$-$C_{24}$-hydroxyalkyl or $C_8$-$C_{24}$-fluoroalkyl chain, dicarboxylic acids having a hydrophobic carbon-containing $C_8$-$C_{24}$ chain, phosphates, sulfates and sulfonates having one or two $C_8$-$C_{24}$-alkyl chains.

**7.** Vesicles according to any one of claims 1 to 6, **characterised in that** they have a diameter between 0,1 and 100 μm.

**8.** Vesicles according to any one of claims 1 to 7, **characterised in that** they comprise a solute encapsulated in their internal cavity.

**9.** Method for the preparation of a dispersion of vesicles in an aqueous medium according to any one of claims 1 to 8, **characterised in that** it comprises the following steps:

i) mixing at least one anionic surfactant and at least one cationic surfactant with a solution of magnetic nanoparticles, said mixing being carried out in an acidic medium at a pH of between 1 and 4, preferably for a period of from 1 to 3 days, the magnetic nanoparticles and the catanionic proto-vesicles formed during this step having the same charge,
ii) optionally, diluting the suspension obtained in step i) in a pure aqueous solution or in an aqueous solution comprising solutes, at a temperature which may optionally vary from 5 to 95,
iii) optionally, removing some of the magnetic nanoparticles by centrifugation, decantation or magnetic sorting,
iv) dialysing the suspension at a pH of between 5 and 7, preferably at a pH = 6, in order to inflate the proto-vesicles formed into spherical catanionic vesicles and cancel and/or reverse the charges of the magnetic nanoparticles, and
v) optionally, removing excess magnetic nanoparticles by centrifugation, decantation or magnetic sorting.

**10.** Method according to claim 9, **characterised in that** a solute to be encapsulated is added in step i).

**11.** Method according to claim 9 or claim 10, **characterised in that** the vesicles are stabilised by at least one polymer adsorbed on their surface.

**12.** Use of vesicles according to any one of claims 1 to 8 for encapsulating active ingredients.

**13.** Cosmetic or pharmaceutical composition comprising at least one catanionic vesicle according to any one of claims 1 to 8.

**14.** Method of guiding catanionic vesicles as defined according to any one of claims 1 to 8, **characterised in that** it

comprises at least one step of guiding said catanionic vesicles by applying a permanent magnetic field gradient.

**15.** Method according to claim 14, wherein the catanionic vesicles comprise at least one encapsulated solute in their internal cavity, said solute preferably being an active ingredient, and **characterised in that** said method comprises a step of freeing said solute by applying an oscillating magnetic field.

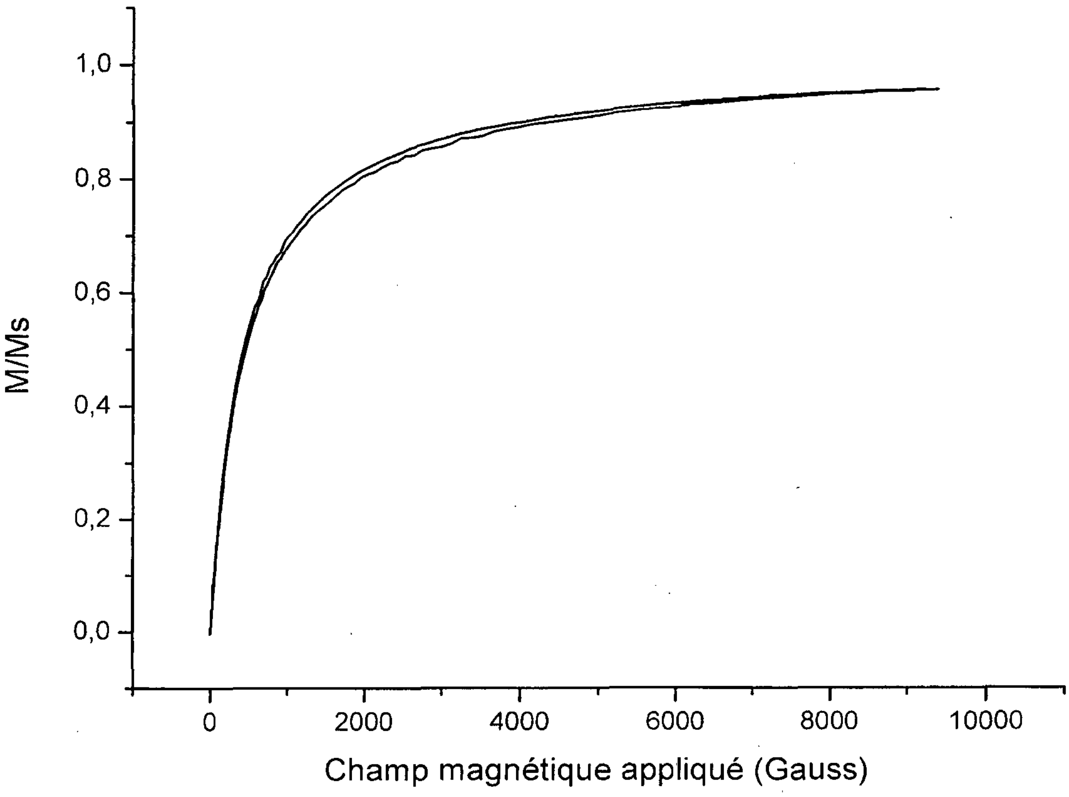
1,0
0,8
0,6
0,4
0,2
0,0
M/Ms
0
2000
4000
6000
8000
10000
Champ magnétique appliqué (Gauss)

FIGURE 1

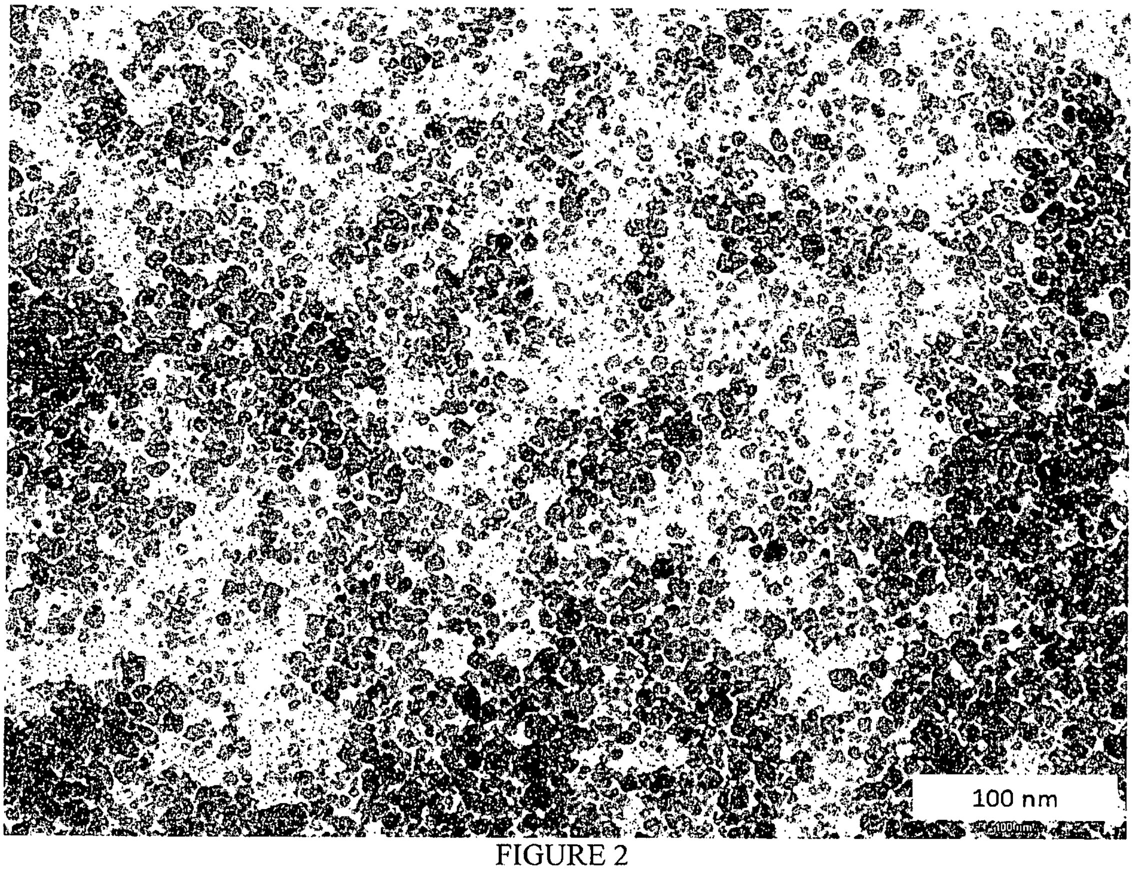


FIGURE 2

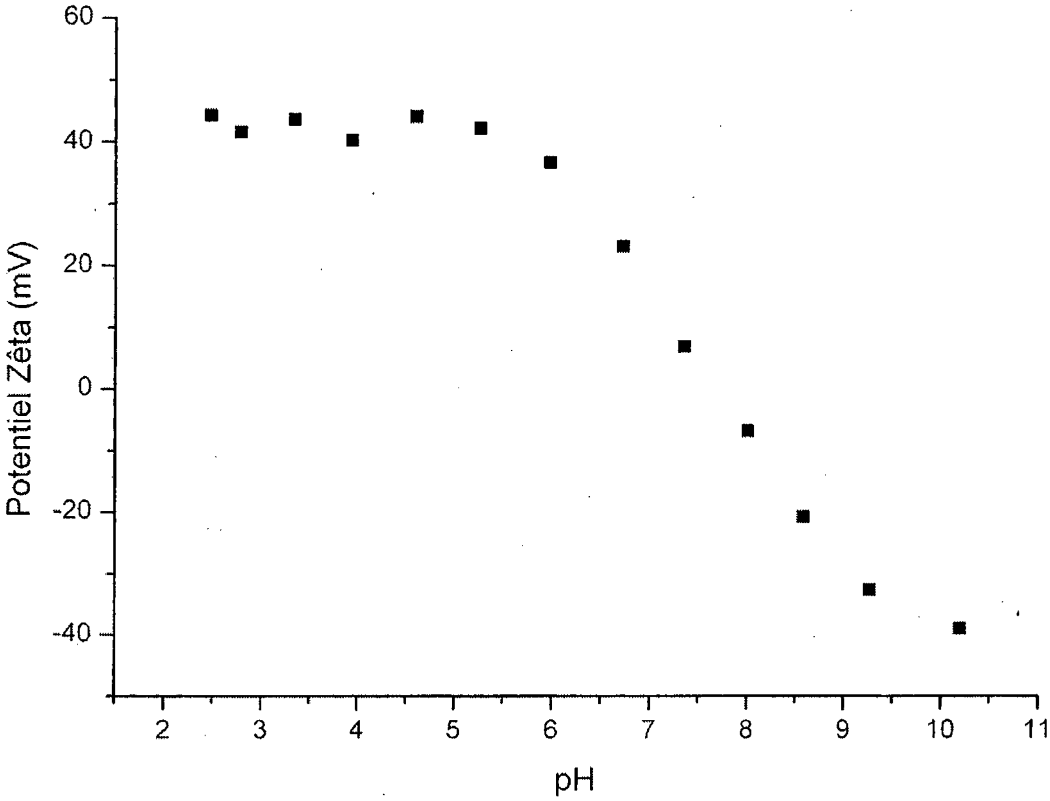


FIGURE 3

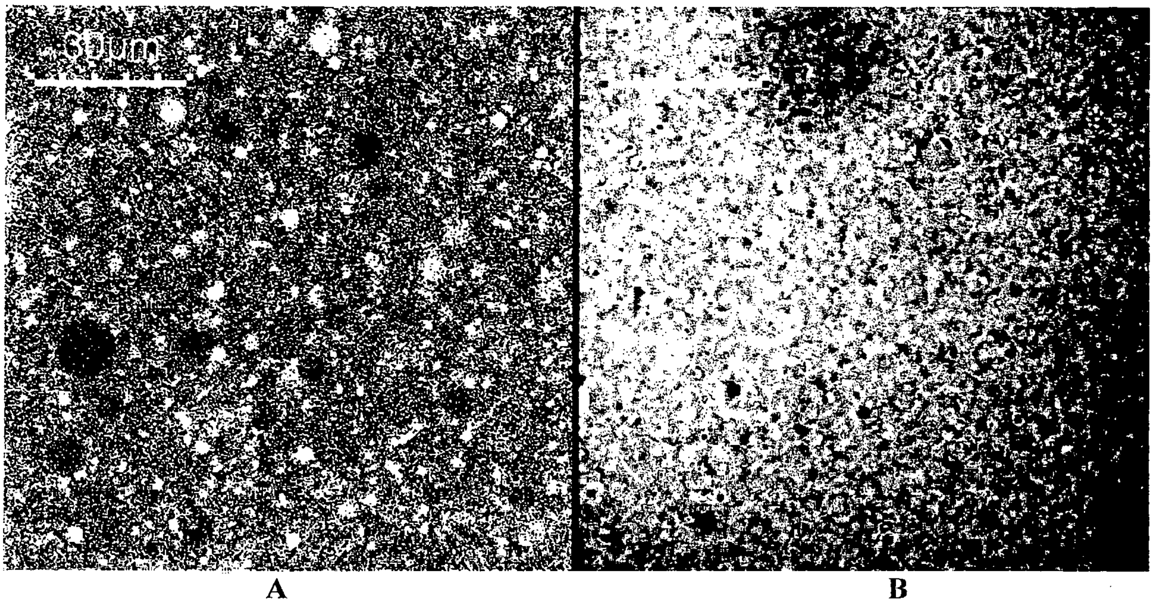


A B

FIGURE 4

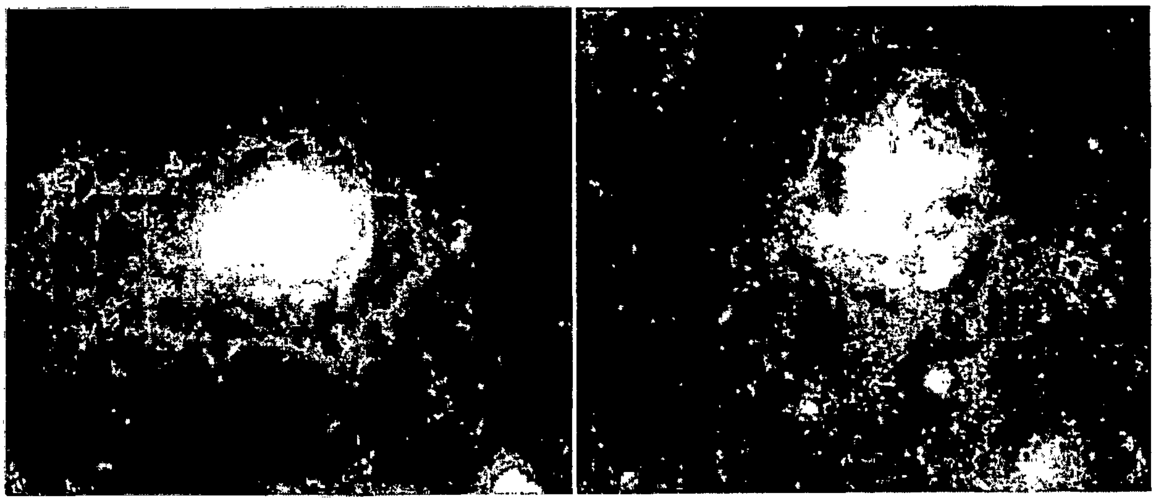

A B

FIGURE 5

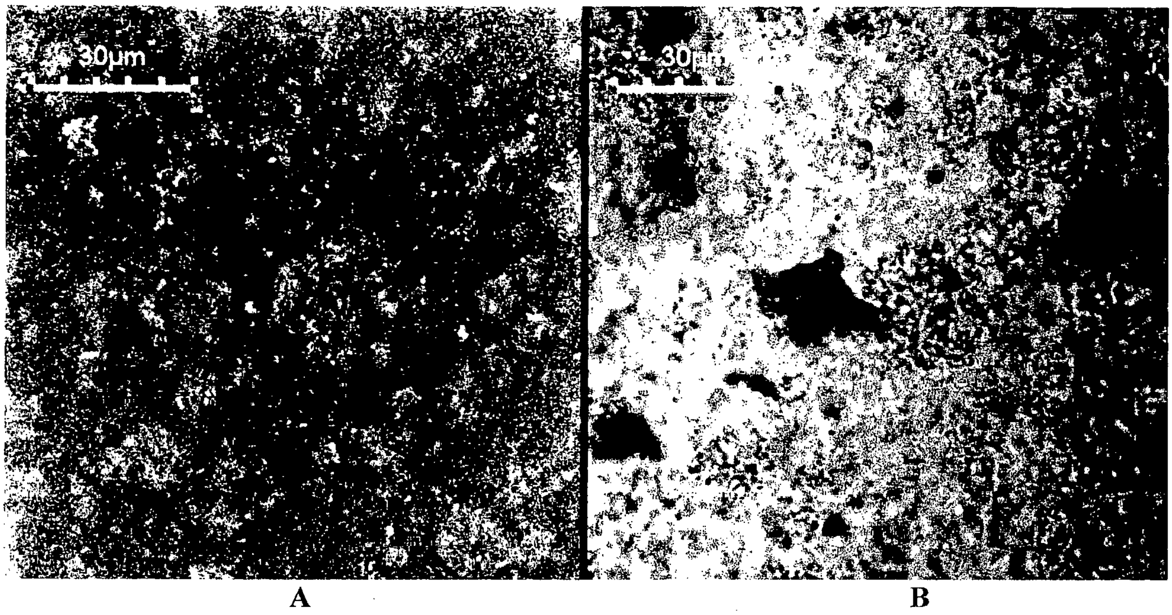


A B

FIGURE 6

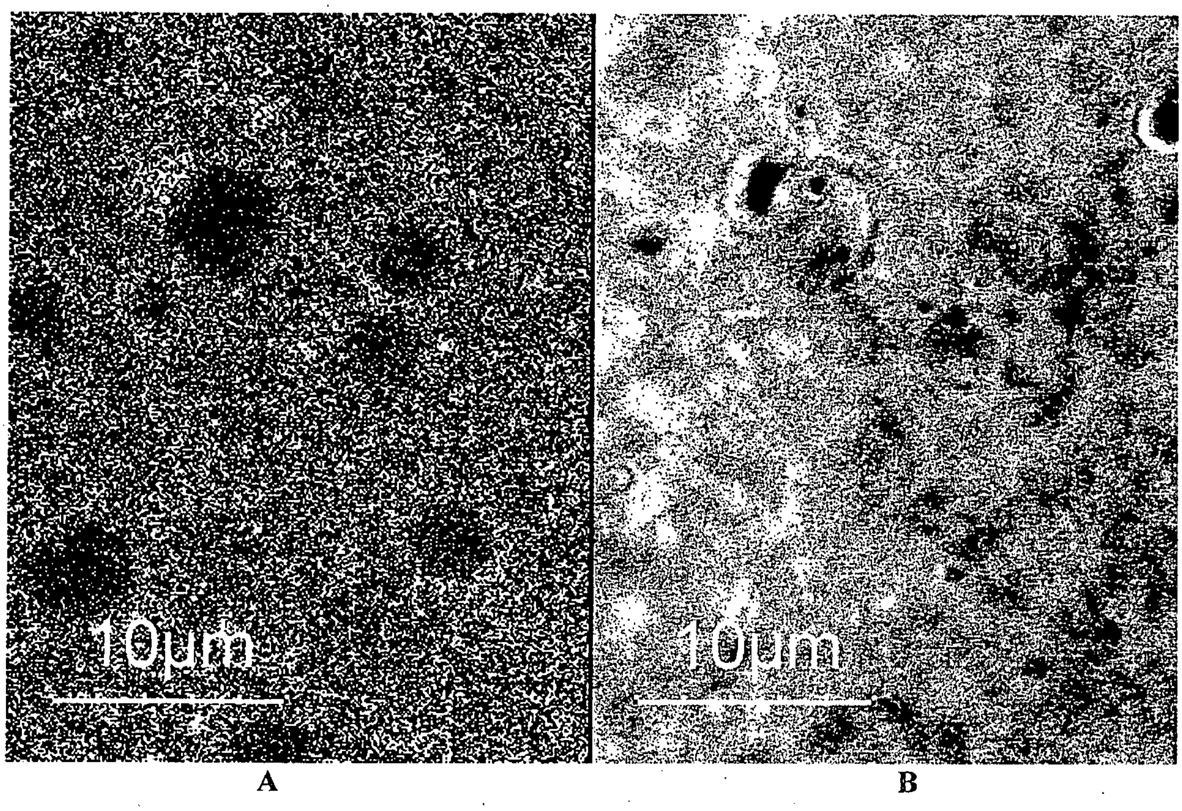


FIGURE 7

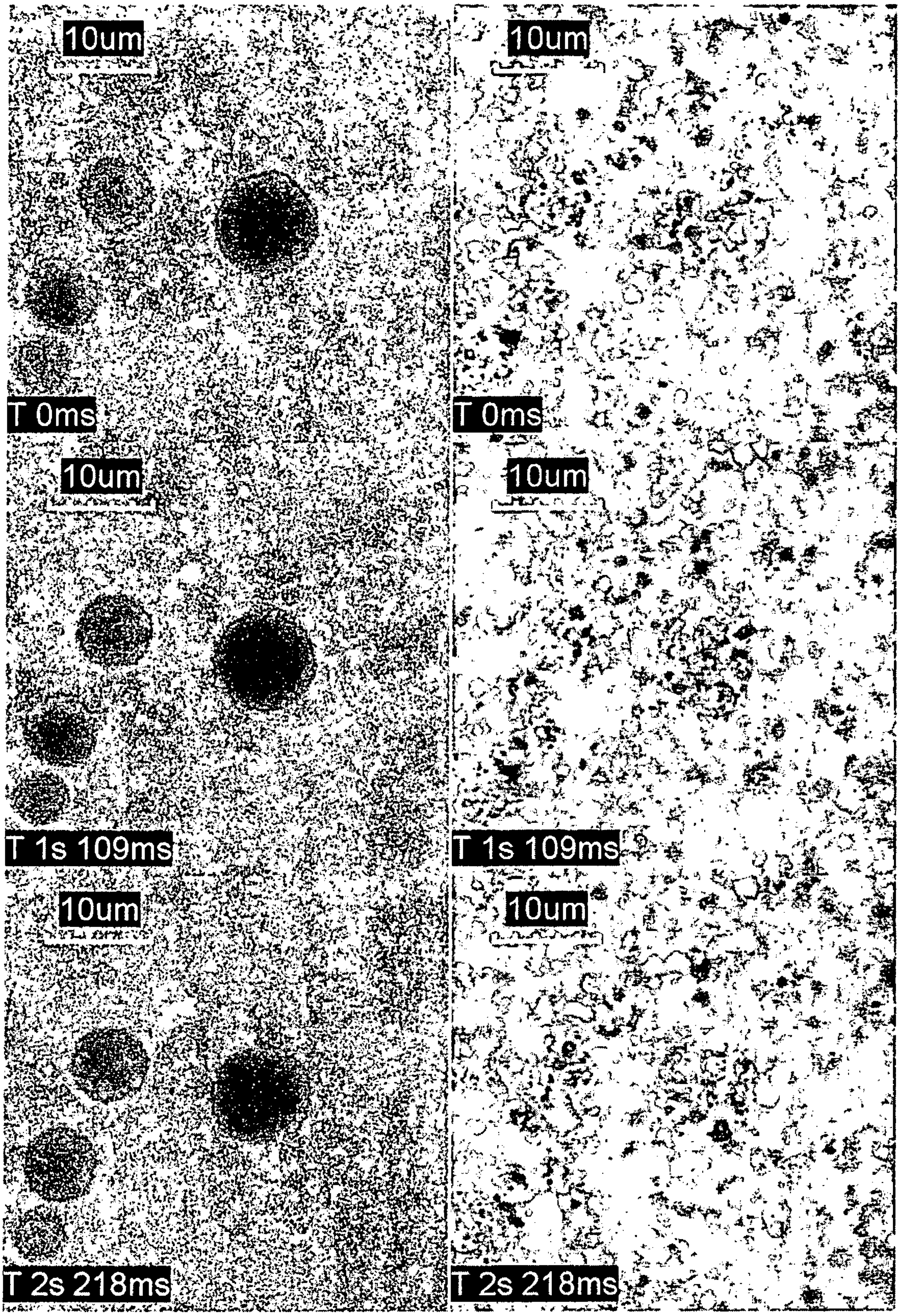
10um
10um
T 0ms
T 0ms
10um
10um
T 1s 109ms
T 1s 109ms
10um
10um
T 2s 218ms
T 2s 218ms

FIGURE 8

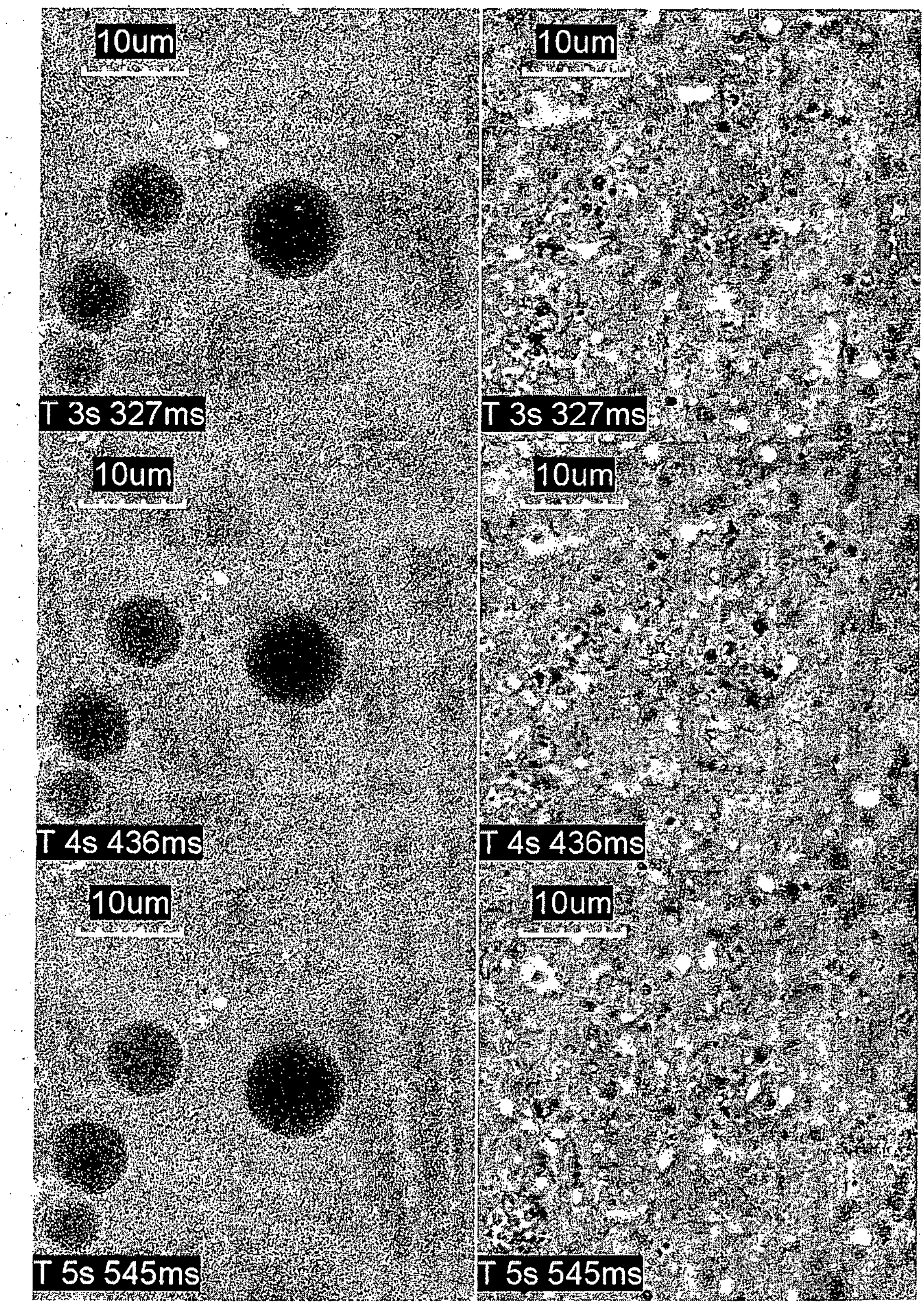


FIGURE 8 (suite)

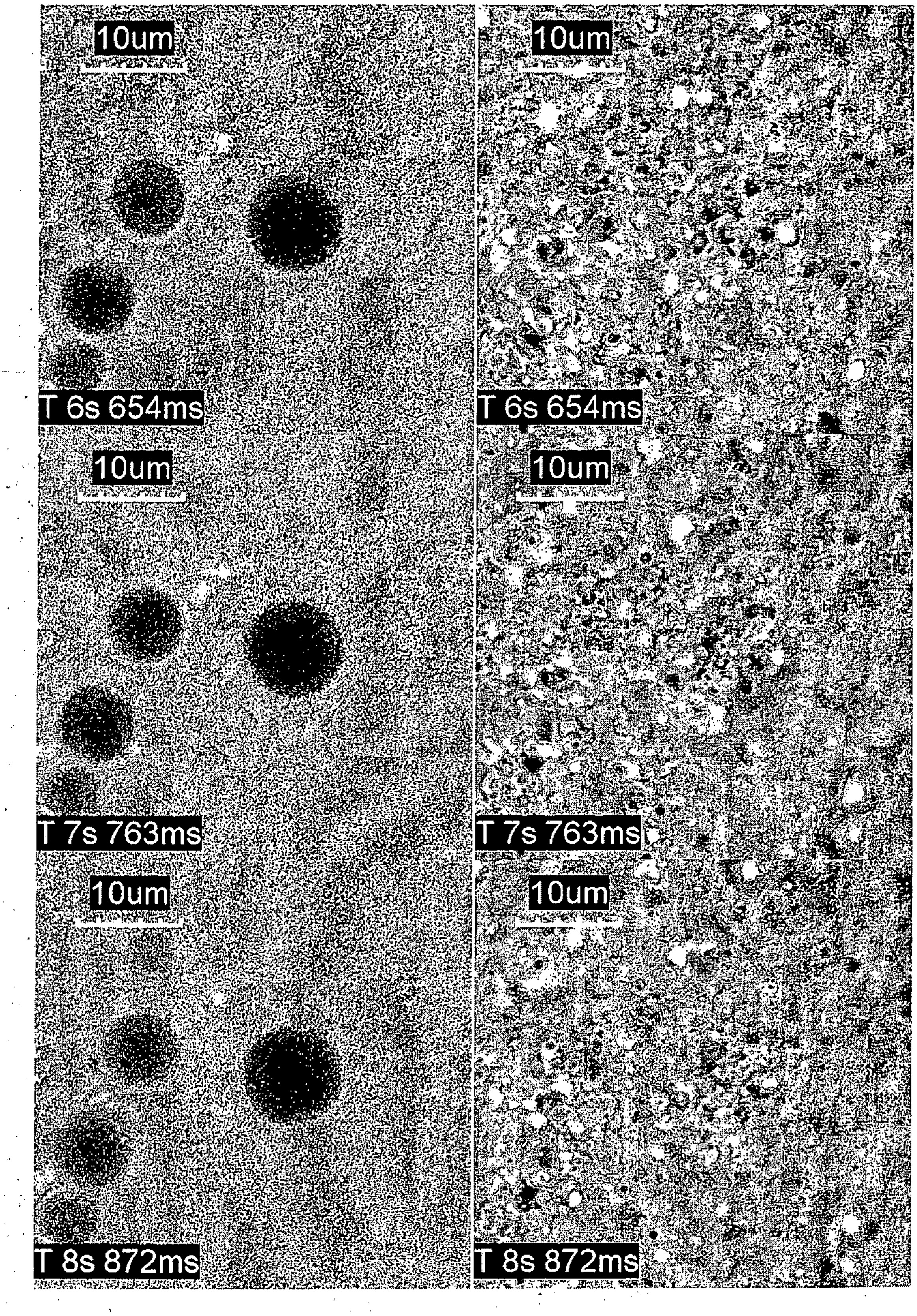


FIGURE 8 (suite)

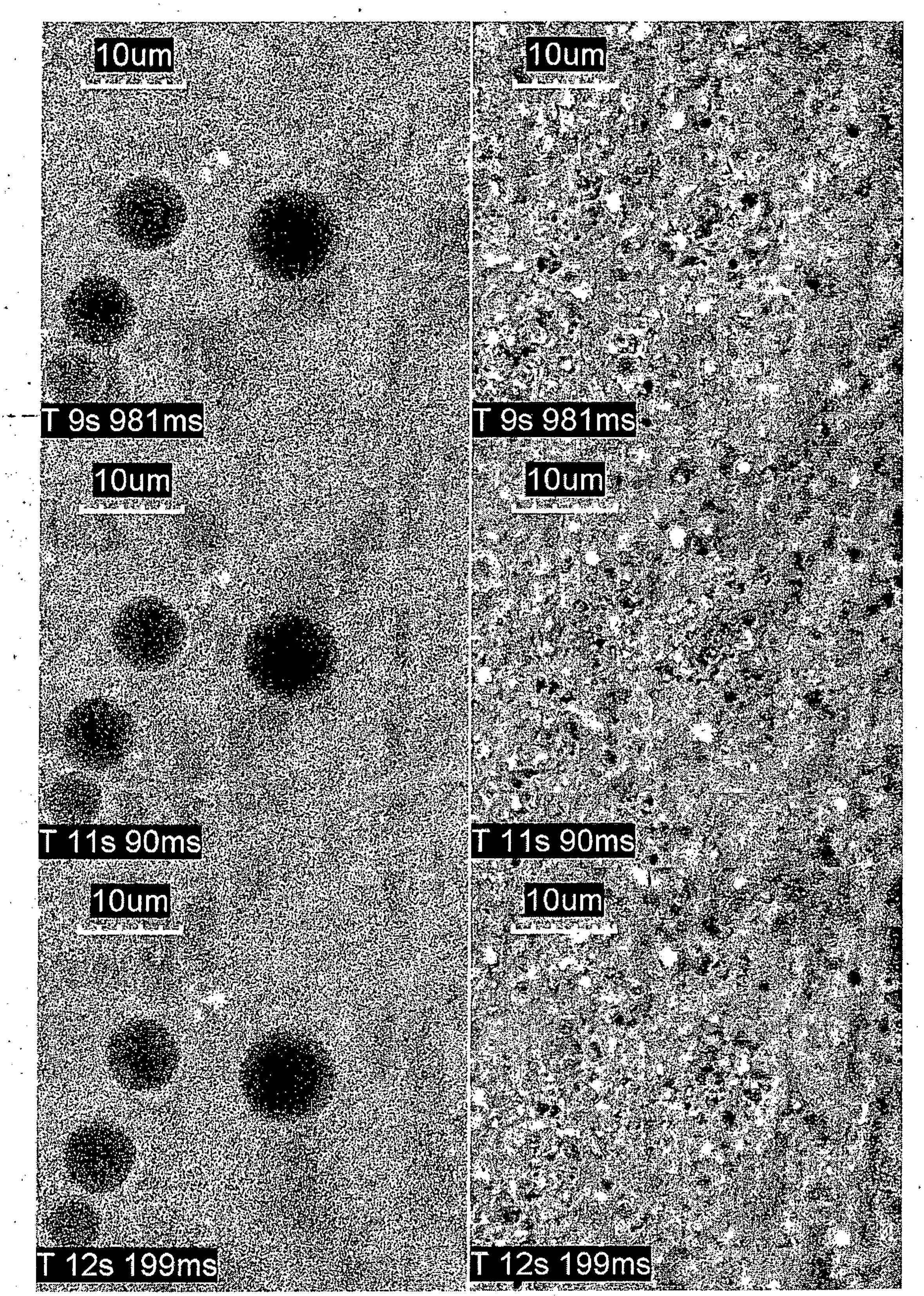


FIGURE 8 (suite)

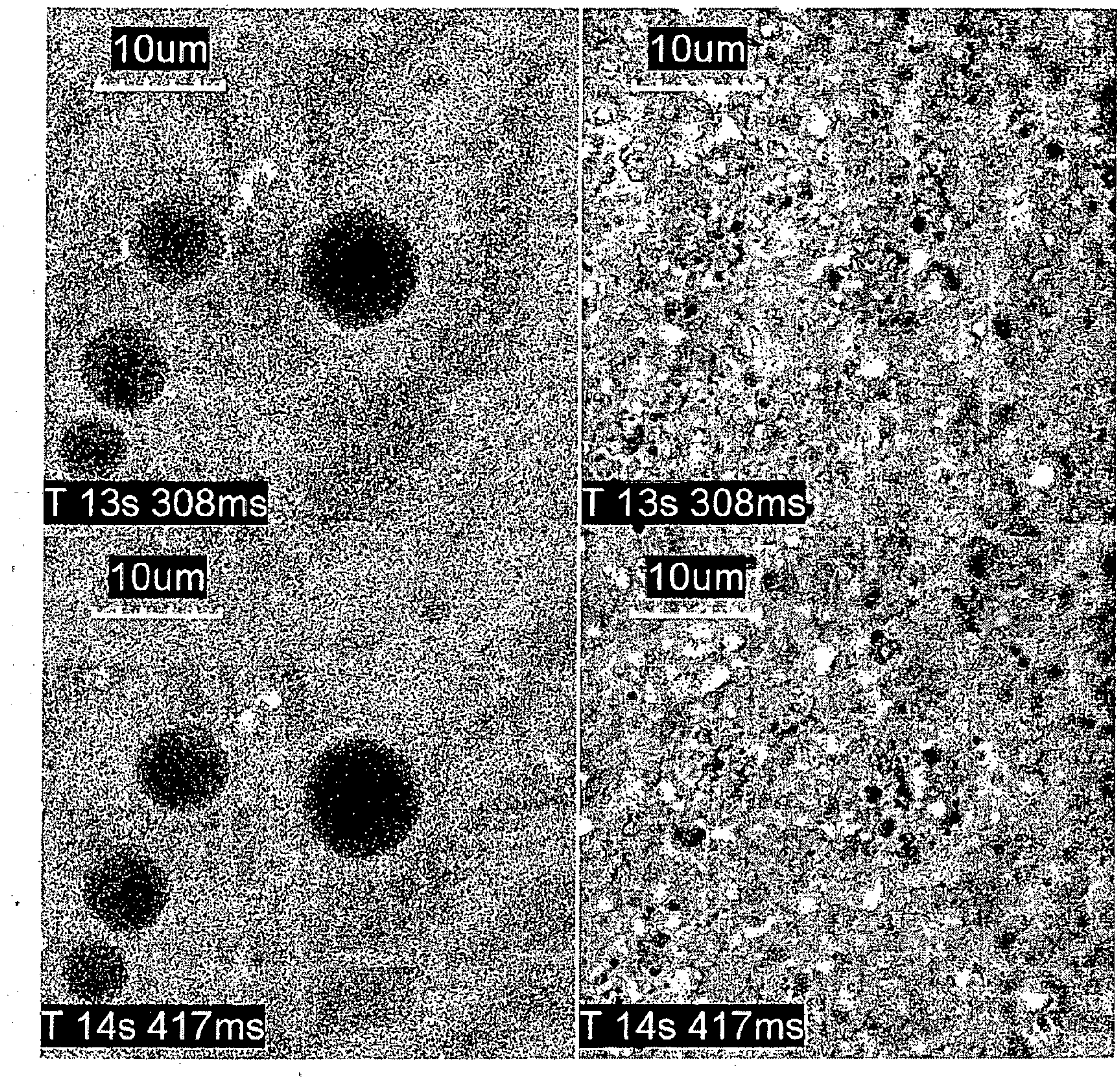


FIGURE 8 (suite)

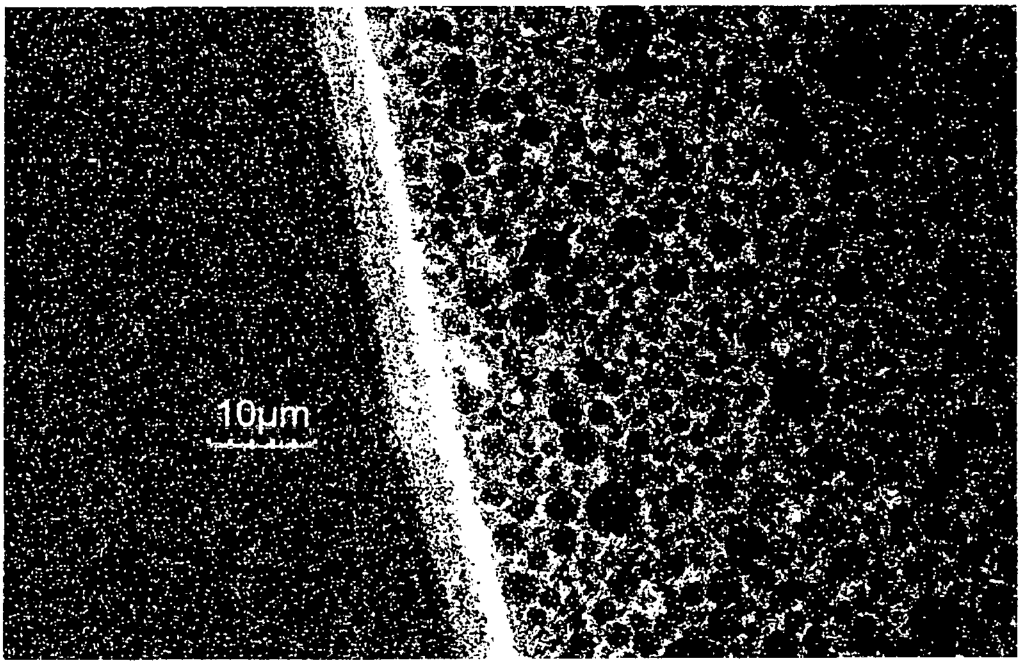


FIGURE 9

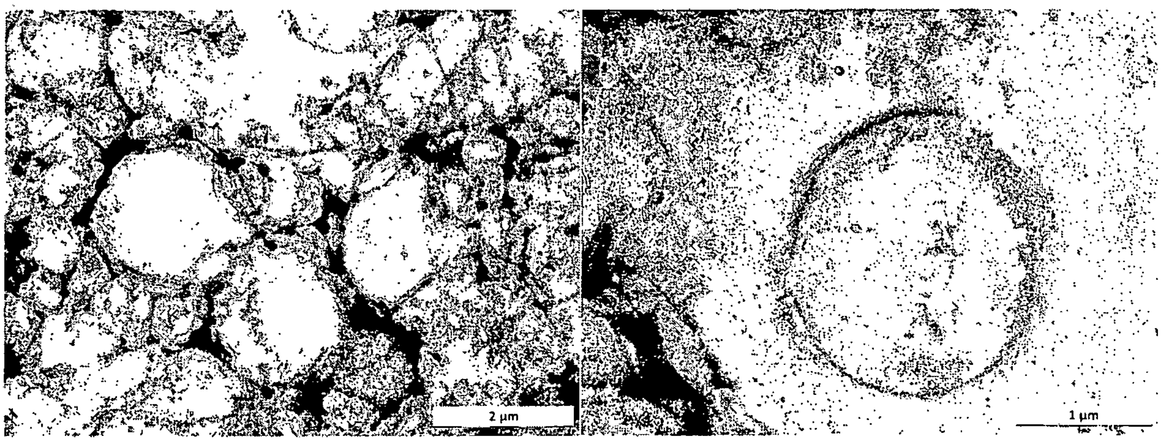


FIGURE 10

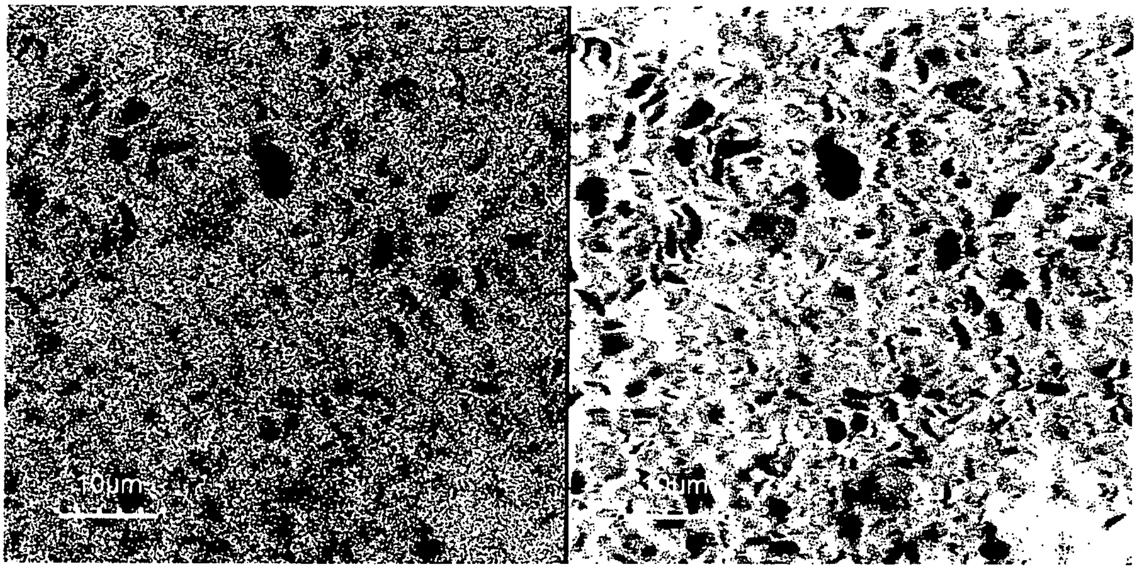


FIGURE 11

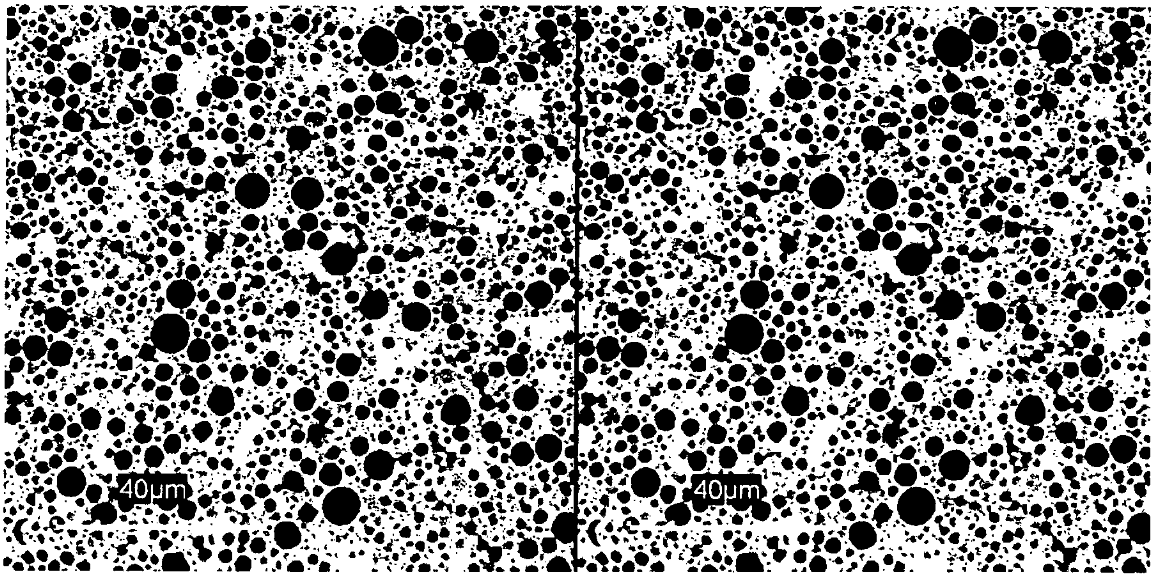


FIGURE 12

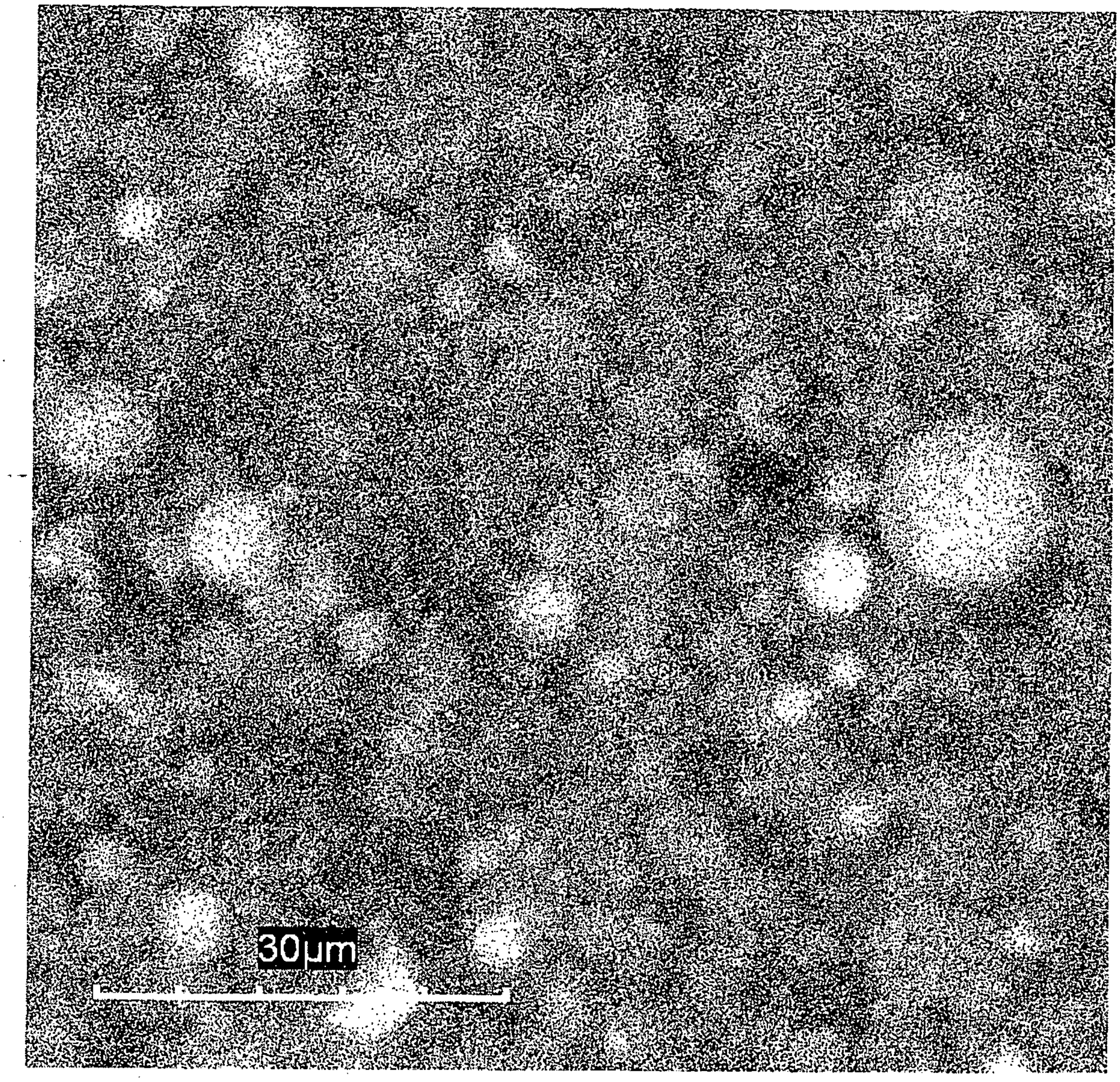


FIGURE 13

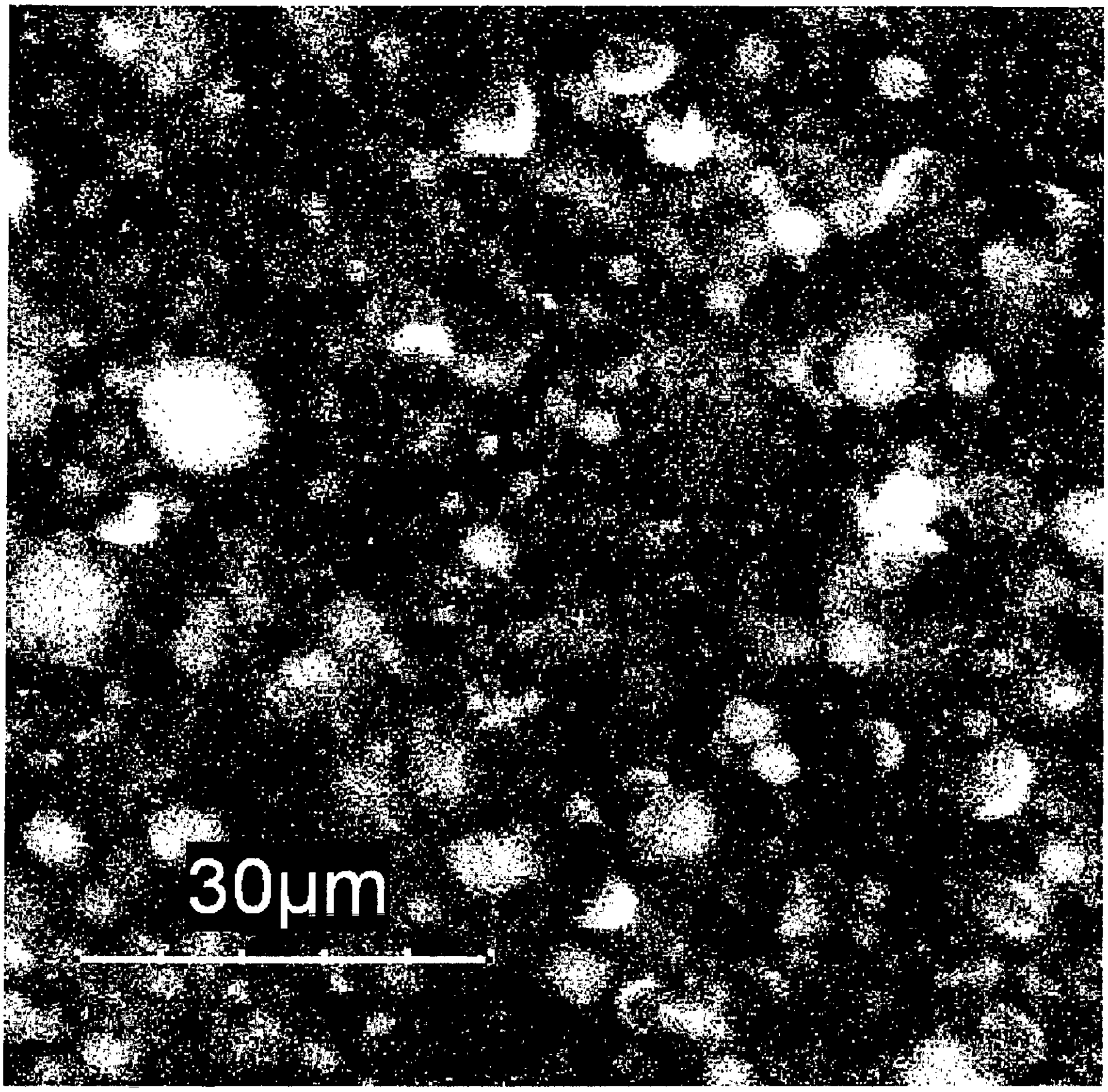


FIGURE 14

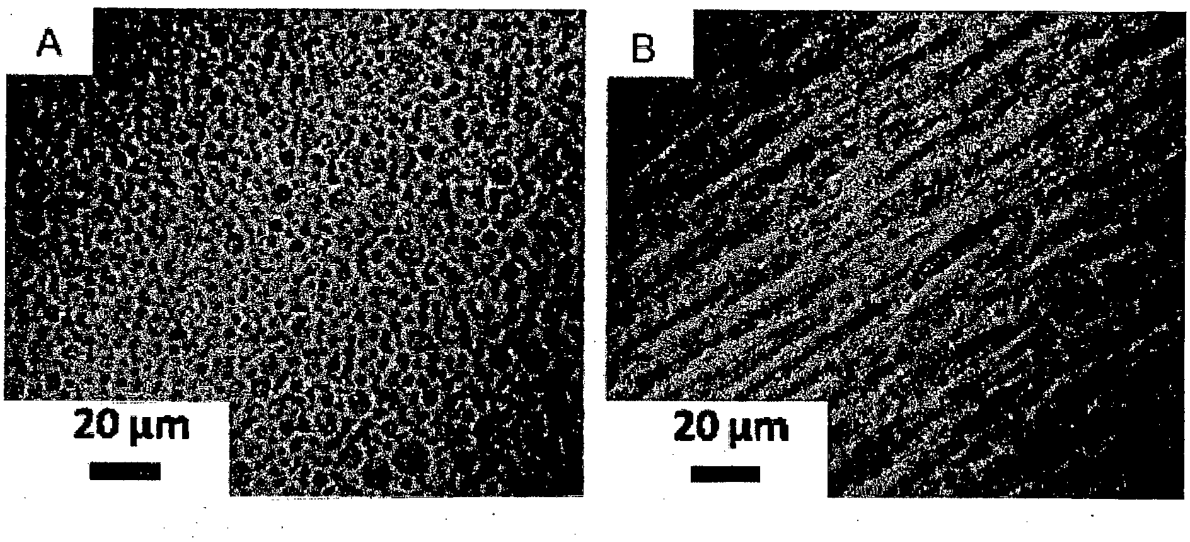


FIGURE 15

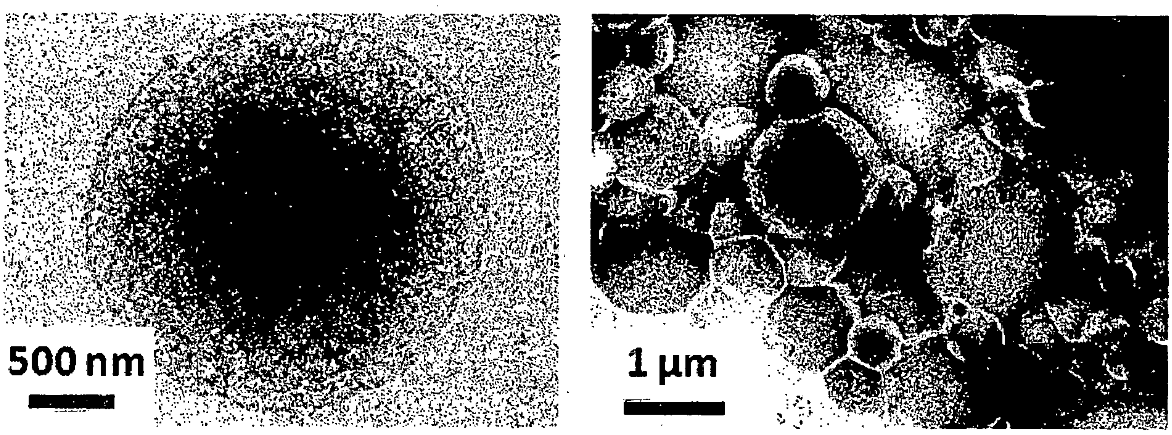


FIGURE 16

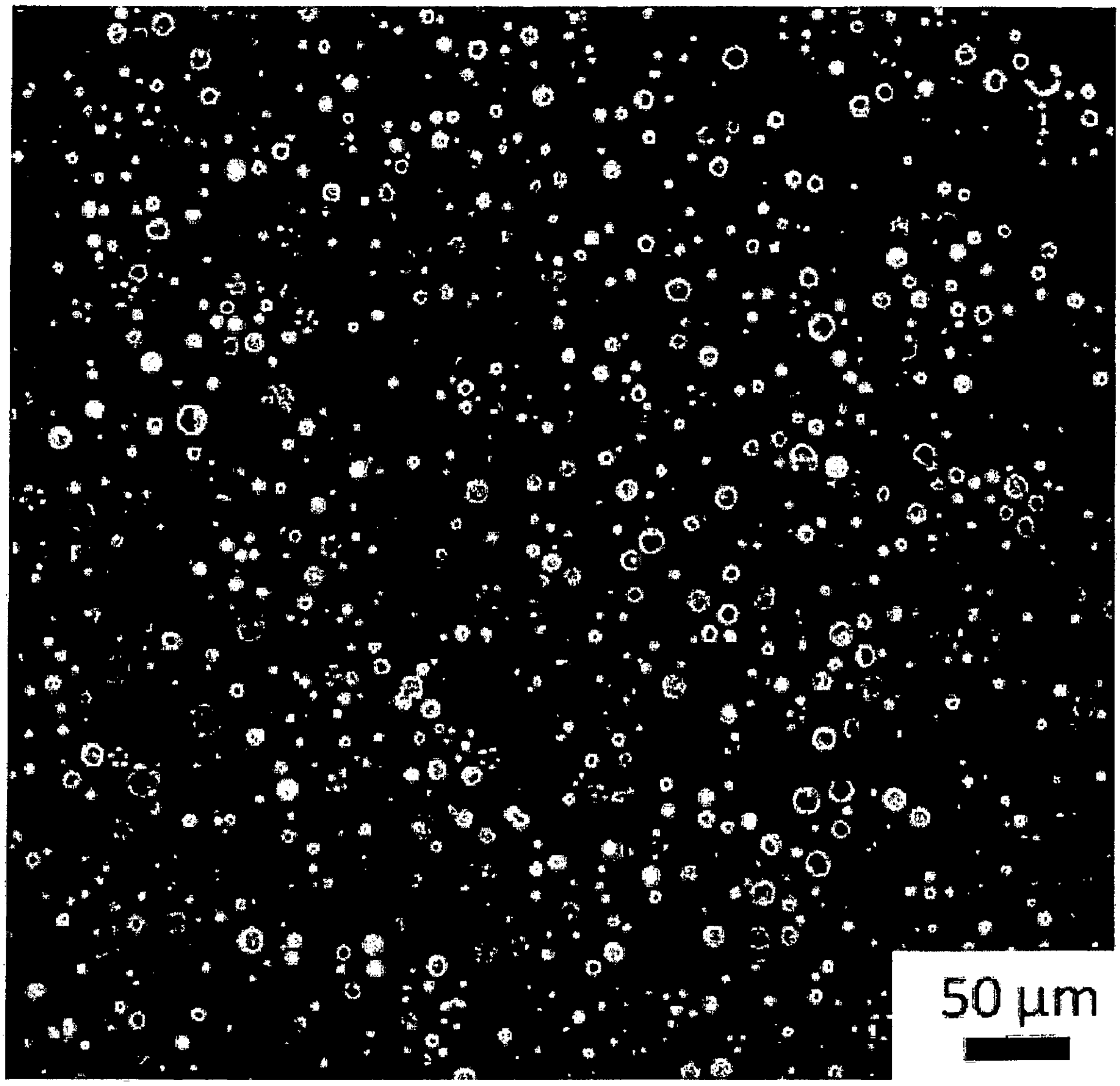


FIGURE 17

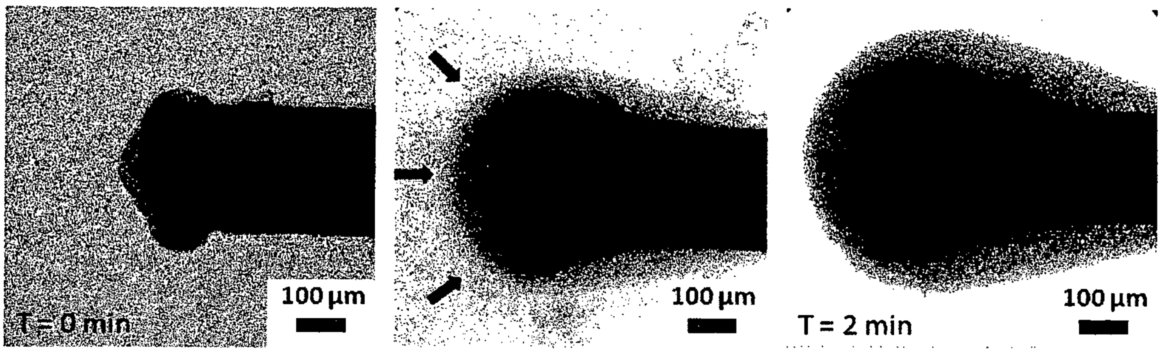


FIGURE 18

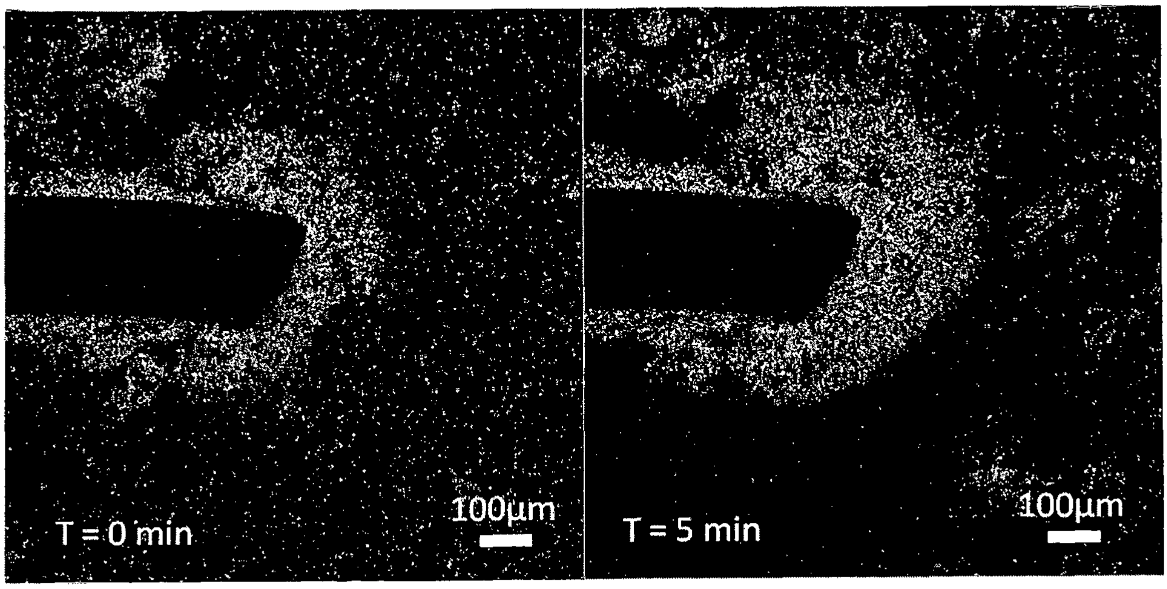


FIGURE 19

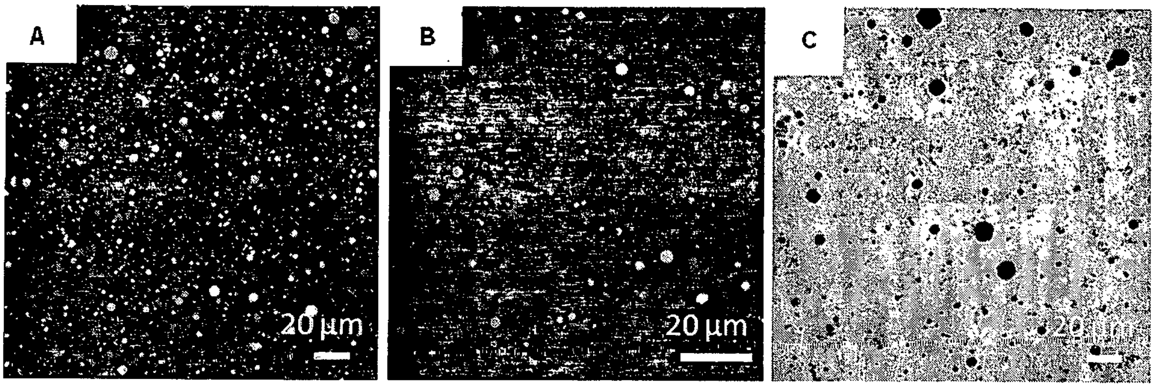


FIGURE 20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2005089927 A
- EP 1846152 A
- FR 2937259 A1


### Littérature non-brevet citée dans la description


- **ZEMB T. et al.** *Science,* 1999, vol. 283, 816-819
- **DUBOIS M. et al.** *Nature,* 2001, vol. 411, 672-675
- **YAACOB I. I. et al.** *Journal of Colloid and Interface Science,* 1995, vol. 171, 73-84
- **YANG Y. et al.** *Journal of Magnetism and Magnetic Materials,* 2006, vol. 305, 40-46
- **M. MARTINA et al.** *J. Am. Chem. Soc.,* 2005, vol. 127, 10676-10685
- **H. Y. KOO et al.** *Chem. Mater.,* 2006, vol. 18, 3308-3313
- **KRACK M.** *J. Am. Chem. Soc.,* 2008, vol. 130, 7315-7320
- **FAURE C. et al.** *J. Phys. Chem. B,* 2009, vol. 113, 8552-8559
- **MENAGER C. et al.** *Colloid and Polymer Science,* 1994, vol. 272 (10), 1295-1299
- **BEAUNE G. et al.** *J. Phys. Chem B,* 2008, vol. 112, 7424-7429
- **CINTRA E. R. et al.** *Nanotechnology,* 2009, vol. 20, 045103
- **BEAUNE et al.** *C. R. Chimie,* 2009, vol. 12, 38-44
- **KOPETZKI D. et al.** *Soft Matter,* 2009, vol. 5, 4212-4218
- **BÉALLE G. et al.** *Soft Matter,* 2011, vol. 7, 1084-1089
- **MASSART R.** *IEEE,* 1981, vol. 17, 1247-1248
- **LEFEBURE et al.** *J. Mater. Res.,* 1998, vol. 13 (10), 2975-2981